Europäisches Patentamt

**European Patent Office**

**Office européen des brevets**

(11) Veröffentlichungsnummer: **0 302 343**
**A1**

(19)

(12) **EUROPÄISCHE PATENTANMELDUNG**

(21) Anmeldenummer: **88111939.0**

(22) Anmeldetag: **25.07.88**

(51) Int. Cl.⁴: **A47L 1/02 , B60S 1/34**

(30) Priorität: **28.07.87 DE 3724856**

(43) Veröffentlichungstag der Anmeldung:
**08.02.89 Patentblatt 89/06**

(84) Benannte Vertragsstaaten:
**ES FR GB IT SE**

(71) Anmelder: **SWF Auto-Electric GmbH**
**Stuttgarter Strasse 119 Postfach 135**
**D-7120 Bietigheim-Bissingen(DE)**

(72) Erfinder: **Bienert, Herbert**
**Ahornweg 15**
**D-7122 Besigheim(DE)**
Erfinder: **Egner-Walter, Bruno**
**Käferflugstrasse 43**
**D-7100 Heilbronn(DE)**
Erfinder: **Prohaska, Hans**
**Nelkenweg 44**
**D-7120 Bietigheim-Bissingen(DE)**
Erfinder: **Schmid, Eckhardt**
**Heilbronner Strasse 62**
**D-7129 Brackenheim(DE)**
Erfinder: **Baumgarten, Peter**
**Theodor-Heuss-Strasse 22**
**D-7141 Steinheim 2(DE)**

(54) Scheibenreinigungsanlage.

㊼ Es wird eine Scheibenreinigungsanlage mit wenigstens einem auf einer Scheibe (12) vorzugsweise linear hin- und her bewegbaren Scheinbenreiniger, insbesondere einem Scheibenwischer (13), beschrieben, der beidendig geführt ist. Der Scheibenreiniger ist dadurch besonders zum Reinigen großer Flächen geeignet, ohne daß die Gefahr besteht, daß er an einem Ende beispielsweise aufgrund von Winddruck abhebt. Bei einer besonders bevorzugten Ausführungsform sind zwei gegenläufig antreibbare Lochbänder (71a, 71b) als Antriebsmittel für den Scheibenreiniger vorgesehen.

Fig. 7

EP 0 302 343 A1

# Scheibenreinigungsanlage

Die Erfindung betrifft eine Scheibenreinigungsanlage mit wenigstens einen auf der Scheibe hin- und herbewegbaren, endseitig antreibbaren Scheibenreiniger.

Es sind Scheibenreinigungsanlagen der verschiedensten Art bekannt. Hauptsächlich gebräuchlich sind solche, die einen oder mehrere Scheibenwischer besitzen, welche ein Wischblatt mit einer Wischleiste aus gummielastischen Werkstoff besitzen, die von einem Traggestell mit mehreren Bügeln gehalten wird, an dem im allgemeinen mittig ein in Längsrichtung über ein Ende des Wischblatts hinausreichender Wischarm angelenkt ist. Über den Wischarm kann der Scheibenwischer hin- und herpendelnd mittels einer motorisch antreibbaren Wischerwelle, die an dem Wischblatt fernen Ende des Wischarms angreift, derart angetrieben werden, daß er ein kreissegmentförmiges Wischfeld auf der Scheibe überstreicht (DE-PS 14 55 961). Es sind aber auch Scheibenreinigungsanlagen bekannt, die Scheibenwischer und Bürsten, Eiskratzleisten oder dergleichen aufweisen (DE-OS 34 47 055). Um ein Wisch- und/oder Reinigungsfeld zu erzielen, das bei viereckigen Scheiben bis in die Ecken reicht, ist es bekannt, sogenannte gesteuerte Wischblätter (DE-PS 21 32 496) oder Lineraranlagen (DE-OS 2 659 579) zu verwenden. Wenn die zu reinigende Scheibe sehr großflächig ist, wie das bei vielen modernen Gebäudefensterscheiben oder Front- bzw. Heckscheiben moderner Kraftfahrzeuge der Fall ist und bei den hierfür vorgesehenen Scheibenreinigungsanlagen der Scheibenreiniger demgemäß sehr lang ausgeführt werden muß, damit ein großflächiges Reinigungsfeld erzielt werden kann, besteht insbesondere bei Scheibenreinigungsanlagen mit Scheibenwischern die Gefahr, daß diese sich während des Reinigungsvorganges verwerfen und rattern, weil sich die lange gummielastische Wischleiste verwirft oder weil das Wischblatt vom angreifendem Wind angehoben wird. Zur Lösung dieses Problems ist es bekannt, Anpreßdruckverstärker bzw. Windabweiser in Form von am Scheibenwischer angeordneten Schaufeln zu verwenden (DE-GM 78 26 802). Eine solche Lösung befriedigt aber nicht in allen Fällen.

Aufgabe der Erfindung ist es, eine Scheibenreinigungsanlage zu schaffen, die jederzeit die gewünschte Reinigung von Scheiben, insbesondere von großflächigen Scheiben, gewährleistet.

Diese Aufgabe wird von einer Scheibenreinigungsanlage gelöst, welche das im kennzeichnenden Teil des Anspruchs 1 aufgeführte Merkmal aufweist. Mit der vorgeschlagenen beidendigen Führung des Scheibenreinigers wird erreicht, daß dieser jederzeit über seine gesamte Längenausdehnung an der Scheibe anliegend über diese hin- und herbewegt werden und diese demgemäß sicher reinigen kann. Unter der vorgeschlagenen beidendigen Führung des Scheibenreinigers ist dabei die beidendige Führung des eigentlichen Reinigungselements, also des Wischblattes oder dergleichen, zu verstehen.

Mit den in den Ansprüchen 2 und 5 aufgezeigten Weiterbildung ist jeweils eine weitere Verbesserung der Scheibenreinigung möglich.

Dabei ist sowohl ein pendelnder als auch ein linearer Antrieb des Scheibenreinigers möglich. In Anspruch 19 ist aufgezeigt, wie bei einem pendelnden Antrieb die beidendige Scheibenreinigerführung verwirklicht werden kann.

Ein besonders wirkungsvoller Scheibenreinigerantrieb ist gegeben, wenn Anspruch 6 verwirklicht wird.

Durch einen in Anspruch 4 vorgeschlagenen ungleichen Linearantrieb sind prinzipiell spezielle Scheibenreinigungseffekte erzielbar. So kann mittels einen in Anspruch 8 vorgeschlagenen Scheibenreinigerantrieb wenigstens ein wichtig Sichtfeld auf der Scheibe schnell und und wenigstens ein weniger wichtiges Sichtfeld auf der Scheibe langsam gereinigt werden. Bei einem Kraftfahrzeug liegt ein wichtiges Sichtfeld etwa mittig auf der Fahrerseite der Frontscheibe. Zusätzlich oder anstatt eines solchen geschwindigkeitsvariablen Antriebs wird die Verwirklichung eines in Anspruch 9 beanspruchten wegvariablen Antriebs vorgeschlagen. So kann bei einer Scheibenreiniungsanlage mit einem einzigen Scheibenreiniger vorgesehen werden, daß dieser in einer ersten Betriebsstufe ein bestimmtes Sichtfeld auf der Scheibe (z.B.: bei einer Horizontalreinigungsanlage von der im Bereich der Fahrerseite-A-Säule eines Kraftfahrzeuges verlaufenden Frontscheibenkante bis zur Scheibenmitte) und in einer zweiten Betriebsstufe die Scheibe über die gesamte zwischen zwei einander gegenüberliegenden Scheibenkanten befindliche Ausdehnung (z.B.: bei einer Horizontalreinigungsanlage von der im Bereich der Fahrerseite-A-Säule eines Kraftfahrzeugs verlaufenden Frontscheibenkante bis zur im Bereich der Beifahrerseite-A-Säule verlaufenden Frontscheibenkante).

Bei einer Scheibenreinigungsanlage mit gemäß Anspruch 13 nebeneinander angeordneten Scheibenreinigern kann, wenn sie in geringen Abstand im gleichen Scheibenendbereich angeordnet sind, vorgesehen werden, daß der weiter innen liegende die ganze Scheibe und der weiter außen liegende die Scheibe bis etwa zur Mitte reinigt. Der ungleiche Antrieb kann auch an beiden Enden eines bzw. eines jeden Scheibenreinigers vorgesehen werden. Auf diese Weise können z.B. trapezförmige Scheiben trapezförmig gereinigt werden.

Die ungleichen Antriebe können mittels eines Rädergetriebes gemäß Anspruch 10 oder Anspruch 11 realisiert werden.

Als Antriebsmotoren kommen insbesondere die in Anspruch 7 aufgezeigten in Betracht.

Es wird darauf hingewiesen, daß für derartige Scheibenreinigungsanlagen unabhängiger Schutz beansprucht wird, da solche Antriebe auch vorteilhaft sind, wenn keine beidendige Scheibenreinigerführung vorgesehen ist.

Mit der in Anspruch 15 vorgeschlagenen beidendigen Wirkverbindung des Scheibenreinigers mit dem gleichen Antriebsmittel wird eine Scheibenreinigungsanlage ohne großen Bauteilaufwand geschaffen. Als Antriebsmittel kann ein endloses, beispielsweise ein endloses Seil vorgesehen werden. Dann ist aber kein ungleicher Linerarantrieb möglich. Ein solcher kann aber realisiert werden, wenn der Scheibenreiniger entweder gemäß Anspruch 16 mit zwei endlosen Antriebsmitteln wirkverbunden wird oder wenn der Scheibenreiniger gemäß Anspruch 17 mit zwei nicht endlosen Antriebsmitteln wirkverbunden wird.

Wenn Anspruch 18 verwirklicht wird, können auch zur Reinigung zweier unterschiedlicher Scheiben dienende Scheibenreiniger angetrieben werden. Es wird darauf hingewiesen, daß auch für einen solchen Antrieb unabhängiger Schutz beansprucht wird, da er auch dann vorteilhaft ist, wenn keine beidendige Scheibenreinigerführung vorgesehen ist.

Ein besonders wirkungsverlustarmer Scheibenreinigerantrieb ist erzielbar, wenn das Antriebsmittel gemäß Anspruch 20 ein Zug-Druckelement ist. Als Zug-Druckelement kommt beispielsweise eine Stange in Betracht. Vorteilhafter ist es jedoch, gemäß Anpruch 21 ein flexibles Zug-Druckelement zu verwenden. Bei einem solchen Zug-Druckelement ist .es möglich, es durch Aufwickeln oder Führen in einem Gehäuseabschnitt beispielsweise wie in Anspruch 28 aufgezeigt, raumsparend unterzubringen.

Mit dem in Anspruch 22 vorgeschlagenen formschlüssigen Antrieb des Antriebsmittels kann ein besonders hoher Wirkungsgrad der Scheibenreinigungsanlage erzielt werden.

Ebenso gewährleistet die in Anspruch 23 aufgeführte Maßnahme einen hohen Wirkungsgrad.

Wenn das Antriebsmittel gemäß Anspruch 24 ausgebildet ist, ist mit Sicherheit gewährleistet, daß immer mehrere Bereiche des Antriebsmittels, nämlich mehrere Glieder, tief mit dem Antriebsrad in Eingriff stehen und daß das Antriebsmittel hervorragend auch entlang stark gekrümmter Scheibenreinigungsanlagenabschnitte bzw. Scheibenabschnitte führbar ist. Ein weniger teileaufwendiges Antriebsmittel, das übliche Anforderungen erfüllt, ist in Anspruch 25 angegeben.

Die in Anspruch 26 vorgeschlagene Verlegungsart des Antriebsmittels ist besonders vorteilhaft. Da es die Scheibe nicht ringsum umgibt, können im Bereich der freien Scheibenkante Zusatzmittel vorgesehen werden. So kann, wenn die Unterkante freisteht, z.B. eine Wasserablaufrinne vorgesehen werden.

Das in Anspruch 27 vorgeschlagen Gehäuse gewährleistet einen Schutz des Antriebsmittel vor Witterungseinflüssen und ermöglicht eine besondere stilistische Gestaltung des die Scheibe umgebenden Gebäude- oder Fahrzeugbereichs. Bei Fahrzeugen kann das Gehäuse auch als Windleitvorrichtung gestaltet werden. Es ist aber auch möglich, bei Gebäudescheiben den Fensterscheibenrahmen als Gehäuse für das Antriebsmittel auszugestalten oder bei Fahrzeugen den die Scheibe umgebenden Karosseriebereich.

Die in Anspruch 29 vorgeschlagene Ausgestaltung des Gehäuses verhindert, daß Regenwasser oder dergleichen in das Gehäuse hineinlaufen und die Funktion des Antriebsmittels beeinträchtigen kann.

Die in Anspruch 31 vorgeschlagene Funktionsweiterung des Gehäuses ermöglicht eine weitere Optimierung der Scheibenreinigung mit vorteilhafter, weil geschützter und unsichtbarer Führung von ihr zugehörigen Elementen. Es wird darauf hingewiesen, daß für ein solches Gehäuse unabhängiger Schutz beansprucht wird, da es auch bei Scheibenreinigungsanlagen mit Vorteil verwendet werden kann, welche keinen beidendig geführten Scheibenreiniger besitzen.

Die in Anspruch 32 aufgezeigte Weiterbildung wirkt sich positiv auf die Gebrauchsfähigkeit des Scheibenreinigers aus, weil er in der Parkstellung geschont wird und bei winterlichen Verhältnissen nicht an dem Element festfrieren kann, in dessen Bereich seine Parkstellung liegt.

Die in Anspruch 33 aufgezeigte Weiterbildung bringt ebenfalls Vorteile. Mit ihr wird vermieden, daß das bzw. der mit einer ersten Bewegung des Scheibenreinigers von der Scheibe bzw. von einem Scheibenbereich entfernte Wasser bzw. Schmutz mit der nächsten Bewegung wieder teilweise über der Scheibe verteilt wird.

Eine vorteilhafte konstruktive Ausgestaltung eines Scheibenreinigers mit elastischer Wischleiste ist in Anspruch 34 angegeben. Bei diesem Scheibenreiniger ist aufgrund der Federn gewährleistet, daß während der Reinigungsvorgänge jeder Längenabschnitt der Wischleiste gleich gut zur Scheibenreinigung ausgenutzt wird.

Weitere vorteilhafte Einzelheiten und Ausgestaltungen der Erfindung sind aus den übrigen Unteransprüchen sowie aus der nachfolgend erläuterten Zeichnung ersichtlich, die Ausführungsbeispiele zeigt.

Dabei ist dargestellt in:

Fig. 1 eine erste Scheibenreinigungsanlage in Draufsicht, in

Fig. 2 ein seitlicher Bereich der in Fig. 1 dargestellten Anlage in Ansicht, in

Fig. 3 ein Schnitt entlang der Linie III - III in Fig. 1, in den

Fig. 4 und 5 zwei Prinzipskizzen zweier verschiedener Scheibenreinigerantriebe, in

Fig. 6 eine Prinzipskizze über eine speziell gelegte beidendige Scheibenreinigerführungsart, in

Fig. 7 eine zweite Scheibenreinigungsanlage in Draufsicht, in

Fig. 8 ein Schnitt entlang der Linie VIII - VIII in Fig. 7 mit vergrößerter Darstellung des leeren Gehäuseabschnitts, in

Fig. 9 ein Schnitt durch das leere Gehäuse entlang der Linie IX - IX in Fig. 7, in

Fig.10 ein Schnitt durch ein anderes Gehäuse für die zweite Scheibenreinigungsanlage in

Fig.10a eine Variante eines Teilbereichs der in Fig. 7 dargestellten Anlage, in

Fig.11 ein Längsschnitt durch einen Abschnitt eines speziellen flexiblen Antriebsmittels, in

Fig.12 ein Endbereich eines Teilabschnitts des Gehäuses für das in Fig. 11 gezeigte Antriebsmittel, in

Fig.13 ein Schnitt durch das Antriebsrad für das Antriebsmittel nach Fig. 11, in

Fig.14 eine Prinzipzeichnung einer dritten Scheibenreinigungsanlage, in

Fig.15 eine Prinzipskizze einer vierten Scheibenreinigungsanlage, in

Fig.16 eine Prinzipzeichnung einer fünften Scheibenreinigungsanlage, in

Fig.17 eine Prinzipzeichnung einer sechsten Scheibenreinigungsanlage, in

Fig.18 bis 18g verschiedene Bewegungsablaufarten der in Fig. 14 dargestellten Anlage, in

Fig.19 bis 19c verschiedene Bewegungsablaufstadien des Scheibenreinigers bei der in Fig. 16 bzw. 17 dargestellten Anlage, in

Fig.20 eine Prinzipzeichnung einer siebten Scheibenreinigungsanlage, in

Fig.21 eine Einzelheit der in Fig. 20 gezeigten Anlage

Fig.22 eine Prinzipskizze einer speziellen Antriebsart, in

Fig.23 eine Prinzipzeichnung einer achten Scheibenreinigungsanlage, in

Fig.24 eine Prinzipzeichnung einer neunten Scheibenwischeranlage, in

Fig.25 eine Prinzipzeichnung einer zehnten Scheibenwischeranlage, in

Fig.26 eine Prinzipzeichnung einer elften Scheibenwischeranlage, in

Fig.27 ein Scheibenwischer in verschiedenen Positionen auf einer Scheibe im Querschnitt, in

Fig.28 die Anlage nach Fig. 27 in Ansicht von oben (teilweise geschnitten), in den

Fig.29 bis 32 drei verschiedene Abwandlungen des Scheibenwischers nach Fig. 27, in Fig. 29 mit einer speziellen Abhebemechanik und in Fig. 32 mit einem speziellen Schutzblech, in

Fig.33 ein erstes Wischblatt im Längsschnitt, in

Fig.34 das Traggestell des Wischblatts nach Fig. 33 in Ansicht von unten, in

Fig.35 ein zweites Wischblatt im Längsschnitt, in

Fig.36 ein für das Wischblatt nach Fig. 33 oder 35 besonders geeigneter Tragbügel in perspektivischer Ansicht und in den

Fig.37 bis 41 der Endbereich des Bügels nach Fig. 36 mit jeweils einer Kunststoffkappenvariante in Ansicht.

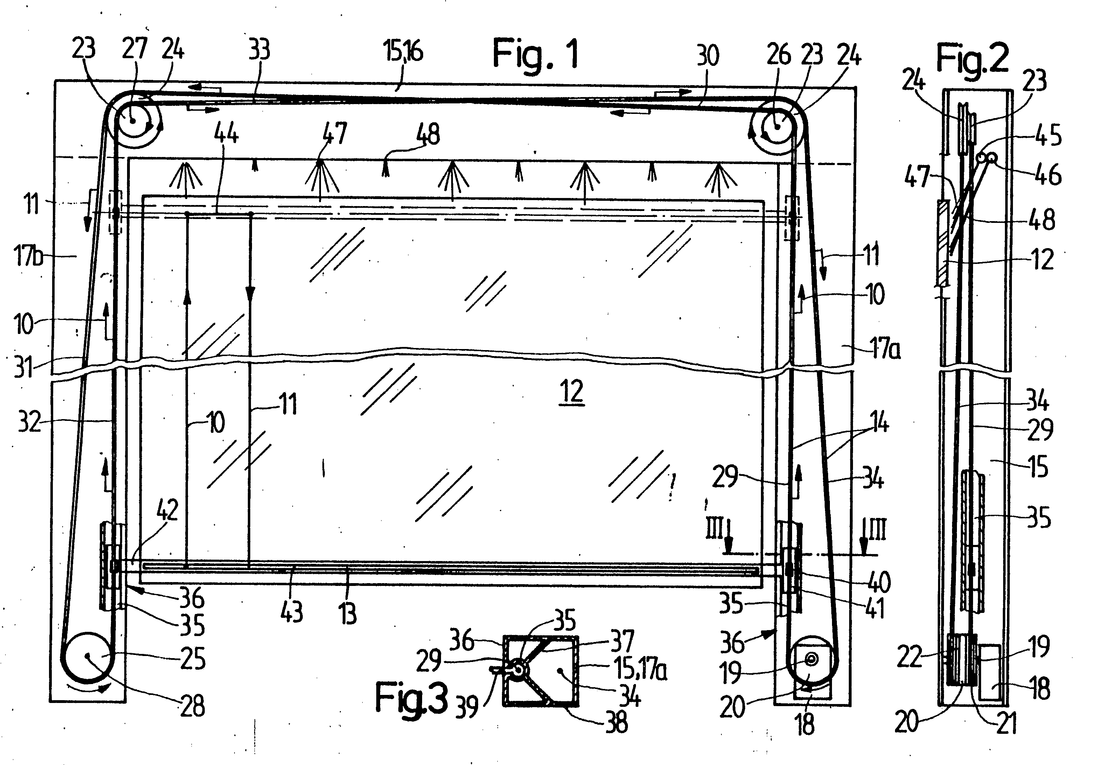

Die in den Fig. 1 bis 3 dargestellte Scheibenreinigungsanlage ist eine Linearwischeranlage mit einem vertikal in der Pfeilrichtungen 10 und 11 über die Scheibe 12 bewegbaren Scheibenwischer 13. Die Scheibe 12 ist eine plane Rechteckscheibe, wie sie an Gebäuden, an Industrieanlagen, an Solarkollektorzellen und dergleichen zu finden ist. Als Antriebsmittel 14 für den Scheibenwischer 13 ist ein endloses, speziell ein Bowdenzug, vorgesehen. Dieser ist in einem in Fig. 1 vorne offen dargestellten, tatsächlich aber dort geschlossenen Gehäuse 15 U-förmig um die Scheibe 12 herumgeführt, und zwar derart, daß die beiden Seitenbereiche des Gehäuses 15 seitlich und unterhalb der Scheibe 12 enden. Das Gehäuse 15 ist aus drei im Umriß rechteckigen Strangpreßprofilen 16, 17a und 17b zusammengesetzt. Angetrieben wird der der Bowdenzug 14 und damit der Scheibenwischer 13 mittels eines umpolbaren Elektromotors 18, welcher hier über einen Gleichrichter an ein 220-Volt-Stromnetz angeschlossen und nahe des unteren Endes der rechten Seitenbereichs 17a des Gehäuses 15 vollständig in demselben angeordnet ist. Bei einer ebenfalls möglichen Anordnung des Motorblocks des Elektromotors 18 außerhalb des Gehäuses 15 könnte der Querschnitt des Strangpeßprofiles kleiner gehalten werden.

Auf der Abtriebswelle 19 des Elektromotors 18 ist eine Wickelscheibe 20 für den Bowdenzug 14 aufgepreßt. Die Wickelscheibe 20 ist zylindrisch ausgebildet und besitzt zwei voneinander getrennte, in Umfangsrichtung der Wickelscheibe 20 gerillte Bereiche 21 und 22 für den Bowdenzug 14. Sowohl im Bereich oder rechten oberen Ecke als auch im Bereich der linken oberen Ecke des Gehäuses 15 sind zwei Umlenkrollen 23 und 24 ungleich großen Durchmessers angeordnet. Im Bereich des unteren Endes des linken Seitenbereichs 17b des Gehäuses 15 ist eine weitere Umlenkrolle 25 vorgesehen. Die Umlenkrollen 23, 24 und 25 sind bei 26, 27 bzw. 28 um nicht dargestellte, am Gehäuse 15 befestigte Bolzen drehbar gelagert. Mittig sind sie im Durchmesser verjüngt. Demgemäß gewährleisten die Wickelscheibe 20 und die Umlenkrollen 23 bis 25 eine sichere Bowdenzugführung.

Die Wickelscheibe 20 und die Umlenkrollen 23 bis 25 sind derart angeordnet, daß ihre Achsen 19 und 26 bis 28 eine der zu reinigenden Scheibe 12 entsprechende Ebene rechtwinklig schneiden. Bei den Umlenkrollen 23 und 24 sind dabei die Umlenkrollen 23 kleineren Durchmessers beim Blick auf die Anlage (Fig. 1) vorne angeordnet. Der Bowdenzug 14 ist, von der Winkelscheibe 20 aus betrachtet, derart geführt, daß er sich von der vorn liegenden Längsrille 21 der Wickelscheibe 20 nahe der zu reinigenden Scheibe 12 im Gehäuseabschnitt 17a als Abschnitt 29 nach oben zu der im rechten Eckbereich des Gehäuses 15 befindlichen Umlenkrolle 23 kleineren Durchmessers erstreckt und diese im Gegenuhrzeigersinn nach oben gerichtet über einen Umschlingungswinkel von 90 Grad umgreift. Anschließend erstreckt er sich als Abschnitt 30 im Gehäuseabschnitt 16 zu der im linken Eckbereich des Gehäuses 15 befindlichen Umlenkrolle 24 größeren Durchmessers und umgreift diese im Gegenuhrzeigersinn nach unten gerichtet über einen Umschlingungswinkel von 90 Grad. Danach erstreckt er sich als Abschnitt 31 im Gehäuseabschnitt 17b nach unten zur Umlenkrolle 25, die er im Gegenuhrzeigersinn über einen Umschlingungswinkel von 180 Grad umgreift. Von dort aus erstreckt er sich im Gehäuseabschnitt 17b als Abschnitt 32 nahe der zu reinigenden Scheibe 12 nach oben zu der im linken Eckbereich des Gehäuses 15 befindlichen Umlenkrolle 23 kleineren Durchmessers, die er im Uhrzeigersinn nach oben gerichtet über einen Umschlingungswinkel von 90 Grad umgreift. Weiter erstreckt er sich als Abschnit 33, welcher den Abschnitt 30 in Draufsicht mittig der Breitenerstreckung des Gehäuseabschnitts 16 überkreuzt, im Gehäuseabschnitt 16 zu der im rechten Eckbereich des Gehäuses 15 befindlichen Umlenkrolle 24 größeren Durchmessers, die er im Uhrzeigersinn nach unten gerichtet über einen Umschlingungswinkel von 90 Grad umgreift. Von da aus erstreckt er sich im Gehäuseabschnitt 17a nach unten zur unteren Rille 22 der Wickelscheibe 20 und dann zur oberen Rille 21 derselben, wo er in den Abschnitt 29 übergeht.

Wenn sich die Abtriebswelle 19 des Elektromotors 18 und damit die Wickelscheibe 20, wie in Fig. 1 angedeutet, im Uhrzeigersinn dreht, wird der Abschnitt 29 des Bowdenzugs 14 von der Wickelscheibenrille 21 durch Reibschluß abgewickelt und bewegt sich in Pfeilrichtung 10 nach oben. Aufgrund der zuvor beschriebenen Bowdenzugführung drehen sich die im rechten Eckbereich des Gehäuses 15 befindliche Umlenkrolle 23 kleineren Durchmessers, die im linken Eckbereich des Gehäuses 15 befindliche Umlenkrolle 24 größeren Durchmesser und die Umlenkrolle 25 im Gegenuhrzeigersinn, wodurch der Abschnitt 32 des Bowdenzugs 14 in Pfeilrichtung 10 nach oben bewegt wird und die im linken Eckbereich des Gehäuses 15 befindliche Umlenkrolle 23 kleineren Durchmessers sowie die im rechten Eckbereich des Gehäuses 15 befindliche Umlenkrolle 24 größeren Durchmessers im Uhrzeigersinn gedreht werden.

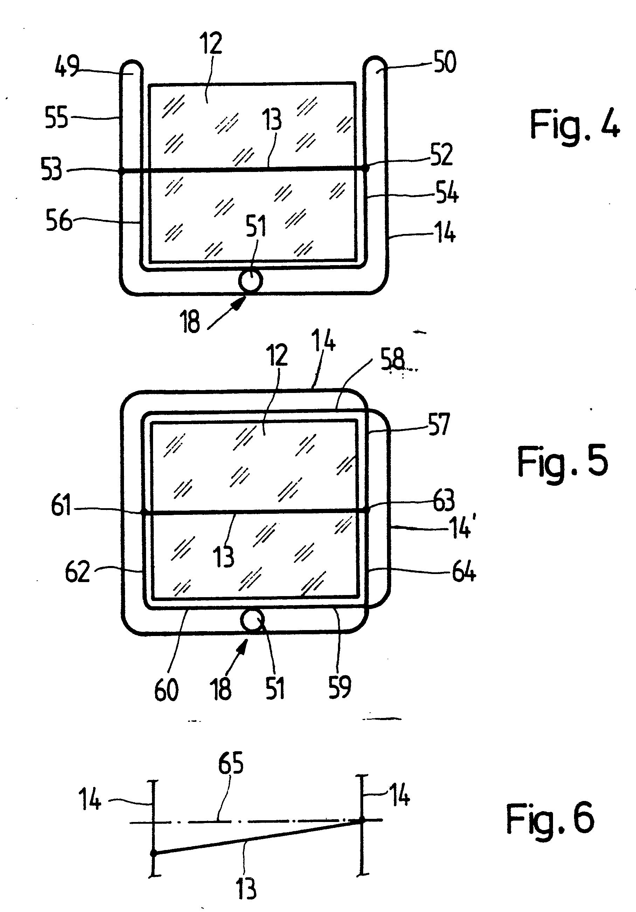

Wie insbesondere die Fig. 3 zeigt, besitzt das Gehäuse 15 zur Bowdenzugführung in den Seitenbereichen 17a und 17b jeweils einen Führungskanal 35, der sich entlang der an die linke bzw. rechte Scheibenkante angrenzenden Gehäusewand 36 erstreckt. Der Führungskanal 35 ist hier zylindrisch ausgebildet und stützt sich mittels Stegen 37 an zwei einander gegenüberliegenden Gehäusewänden 38 ab. Im Bereich der Gehäusewand 36 besitzt er einen sich über die gesamte Führungskanallänge erstreckenden Schlitz 39. Sowohl an dem Bowdenzugabschnitt 29 als auch am Bowdenzugabschnitt 32 ist ein zylindrischer Nippel 40 befestigt, der von einem zylindrischen Gleitstück 41 fest umgriffen wird, das einen dem Führungskanal 35 angepaßten Außendurchmesser hat und mit einem radial nach außen gerichteten Fortsatz 42 durch den Führungskanalschlitz 39 ragt. Die beiden Fortsätze 42 gehen ineinander über. Sie stellen mit dem oberhalb der zu reinigenden Scheibe 12 liegenden Bereich einen Tragbügel für die Gummiwischleiste 43 des Scheibenwischers 13 dar, welche fast von der linken Scheibenkante bis zur rechten Scheibenkante reicht.

Die Bowdenzugabschnitte 29 und 32 verlaufen dabei in einer derartigen Höhe, daß der Scheibenwischer 13 in der in Fig. 1 mit ausgezogenen Linien dargestellten, nahe des unteren Scheibenwandes liegenden waagrechten Endstellung nicht auf der Scheibe 12 aufliegt und beim Uhrzeigersinnantrieb der Elektromotor-Abtriebswelle 19 und damit der Wickelscheibe 20, wodurch der Bowdenzug 14 wie zuvor beschrieben angetrieben wird, bei der Aufwärtsbewegung in Pfeilrichtung 10 ebenfalls auf Abstand zur Scheibe 12 über diese hinweggeführt wird. Wenn der Scheibenwischer 13 die in Fig. 1 mit gestrichelten Linien angedeutete, nahe des oberen Scheibenrandes liegende Endstellung erreicht hat, tritt eine nicht dargestellte Absenkmechanik in Kraft, die den Scheibenwischer 13 während eines mit der Linie 44 angedeuteten kurzen Zeitabschnitts auf die Scheibe 12 zu bewegt, bis die Gummiwischleiste 43 auf der Scheibe 12 aufliegt. Gleichzeitig wird der Elektromotor 18 umgepolt. Die Umpolung wird ausgelöst durch nicht dargestellte Magnete, welche am Scheibenwischer 13 befestigt sind und Reed-Schalter betätigen. Beim durch die Umpolung bewirkten Gegenuhrzeigersinnantrieb der Elektromotor-Abtriebswelle 19 und dem dadurch bewirkten Bowdenzugantrieb in die umgekehrte Richtung wie in Fig. 1 dargestellt wird der Scheibenwischer 13 mit der Gummiwischleiste 43 auf der Scheibe 12 aufliegend in Pfeilrichtung 11 nach unten über diese hinwegbewegt, bis er wieder die mit ausgezogenen Linien dargestellte Stellung erreicht hat. Hier tritt die Absenkmechanik außer Kraft und der Elektromotor 18 wird, je nach Wischeranlagenschalterbetriebsstellung, entweder wieder über Reed-Schalter umgepolt, so daß der Scheibenwischer 13 wieder von der Scheibe 12 abgehoben in Pfeilrichtung 10 nach oben bewegt wird, oder ausgeschaltet, so daß der Scheibenwischer 13 von der Scheibe 12 abgehoben stehenbleibt.

Wie die Fig. 1 und 2 weiter zeigen, erstrecken sich durch den Gehäuseabschnitt 16 zwei Sprührohre 45 und 46 hintereinander. Das vordere Sprührohr 45 führt Wasser 47 und das hintere Sprührohr 46 eine spezielle Waschflüssigkeit 48, hier ein fettlösende. Bei entsprechender Schalterbetätigung kann das Wasser 47 und/oder die Waschflüssigkeit 48 auf die Scheibe 12 gesprüht werden. Die Sprühvorgänge werden hier jedesmal ausgelöst, wenn der Scheibenwischer 13 die in Fig. 1 dargestellte Stellung verläßt. Die Scheibe 12 ist somit feucht, bevor der Scheibenwischer 13 arbeitet. Dabei besitzen die Sprühröhre 45 und 46 ständig offene kleine Auslaßöffnungen für die Flüssigkeiten und sind um ihre Längsachse drehbar gelagert. Wenn sie nach unten gedreht sind, können die Flüssigkeiten ausströmen, während das in einer weiter oder ganz noch oben gedrehten Stellung der Rohre 45 und 46 nicht möglich ist, wenn die Rohre 45 und 46 nicht mit nachströmender Flüssigkeit beaufschlagt werden. Es sind auch Varianten möglich, bei denen die Sprührohre 45 und 46 an den Auslaßöffnung mit Spritzdüsen versehen sind oder bei denen sie Ventile besitzen und nicht drehbar gelagert sind. Diese Varianten erfordern aber einen größeren Herstellungsaufwand für die Sprührohre. Als Flüssigkeitsspeicher sind Behälter mit Kraftfahrzeug-Waschpumpen vorgesehen, die einen Füllstandssensor besitzen, der an eine Anzeigeeinheit angeschlossen ist, die beim Anlagebetriebsschalter aufgeordnet ist und ein Signal, hier: ein optisches Signal, gibt, wenn Flüssigkeit nachzufüllen ist.

Insgesamt ist somit mit der beschriebenen Scheibenreinigungsanlage eine sichere und vollständige Reinigung der einem Betrachter zugekehrten Seite der Scheibe 12 gewährleistet.

Zur weiteren Verbesserung der Reinigungswirkung könnte die Scheibenreinigungsanlage mit wenigstens einem weiteren, nahe bei und vorzugsweise parallel zu dem Scheibenreiniger 13 angeordneten Scheibenreiniger versehen sein, der entweder gleich wie ersterer aufgebaut ist und eine Wischleiste besitzt oder der anders aufgebaut ist und z.B. als Bürste gestaltet ist. Diese sollte dann so angeordnet werden, daß sie während der Abwärtsbewegung 11 vor dem Scheibenreiniger 13 läuft und somit die Scheibe 12 vorreinigt. Es ist auch möglich, eine weiter verbesserte Reinigungswirkung durch Verwendung eines Scheibenreinigers mit mehreren, vorzugsweise zwei parallel zueinander verlaufenden Wischleisten zu verwenden.

Bei einer weit entfernt voneinander vorgesehenen Anordnung mehrerer Scheibenreiniger und entsprechend langer Auslegung des Antriebsmittes 14 und der Gehäuseabschnitte 17a und 17b könnte die Anlage zum Reinigen mehrerer in verschiedenen Höhenbereichen, z.B. in verschiedenen Gebäudestockwerken angeordneten Scheiben verwendet werden.

Bei einer entsprechenden Unterteilung des Scheibenreinigers 13 oder eines anderen Scheibenreinigers in mehrere nebeneinander liegende Abschnitte und entsprechend langer Auslegung des Antriebsmittels 14 und entsprechend breiter Auslegung des Gehäuseabschnitts 16 könnte die Anlage zum Reinigen mehrerer nebeneinanderliegender Scheiben verwendet werden.

Die Scheibenreinigungsanlage könnte noch, wenn ein entsprechender Zugang zum Antriebsmittel 14 z.B. durch den nicht dargestellten Rahmen der Scheibe 12 vorgesehen würde, auf der anderen Seite der Scheibe 12 mit einem Scheibenreiniger 13 versehen werden. Bei entsprechendem Druchtritt des bzw. eines Sprührohres durch den Rahmen ist dann auch eine Feuchtreinigung der anderen Scheibenseite möglich.

Bei solchen Scheibenreinigungsanlagen kann die Verwendung mehrerer Motoren erforderlich sein. Selbstverständlich könnte in allen Fällen anstelle wenigstens eines Elektromotors wenigstens ein anderer Motor verwendet werden, der ebenso wie ein Elektromotor nicht wie in Fig. 1 dargestellt, den Platz mit der Umlenkrolle 25 tauschen oder dort zusätzlich vorgesehen werden kann oder bei anderer Bowdenzugführung in einem Bereich vorgesehen werden kann, wo sich Umlenkrollen 23 und 24 befinden.

Die beschriebene, eine ähnliche oder eine andere Scheibenreinigungsanlage mit oder ohne Wasser- und/oder Waschflüssigkeitsversorgung kann mit einem Steuergerät gekoppelt werden, das eine Zeitsteuerung des Anlagenbetriebs ermöglicht. Bei an Gebäuden, Industrieanlagen, Solarkollektorzellen oder dergleichen, also nicht an Fahrzeugen, vorgesehenen Scheibenreinigungsanlagen könnte das Steuergerät z.B. derart programmiert werden, daß vollautomatisch wöchentlich einmal eine Scheibenreinigung erfolgt.

Das Steuergerät könnte auch bzw. auch noch derart programmiert sein, daß es das Abheben des Scheibenreinigers induziert. Weiterhin könnte es bei einer Scheibenreinigungsanlage mit Wasser- und/oder Waschflüssigkeitsversorgung derart programmiert sein, es beim Anlagenbetrieb mehrmals, z.B. drei- bis fünfmal Sprühvorgange induziert, bevor der Scheibenreiniger 13 die obere Stellung (Fig.1) erreicht hat und daß anschließend mehre, z.B. zwei bis drei Zyklen ohne Sprühvorgänge zum Nachwischen vom Scheibenreiniger durchfahren werden. Da während des Nachwischens keine Flüssigkeit über die Scheibe läuft, die bei Bewegung des Scheibenreinigers 13 in Pfeilrichtung 10 unerwünscht wieder hochbefördert werden könnte, kann hier auf das Abheben des Scheibenreinigers 13 ohne weiteres verzichtet werden.

In Fig. 4 ist angedeutet, wie bei einer mittigen Anordnung eines Motors 18 zum Antrieb eines Scheibenreinigers oder mehrerer Scheibenreiniger ebenfalls mittels eines einzigen endlosen Antriebsmittels 14, das ein Bowdenzug, ein Zahnriemen oder dergleichen sein kann, die Antriebsmittelführung bzw. -verlegung aussieht. Das Antriebsmittel 14 umschreibt hier ein U, an dessen Schenkelenden 49 und 50 jeweils eine nicht dargestellte Umlenkrolle vorgesehen ist, besitzt keine sich in Draufsicht kreuzende Abschnitte und tangiert das vom Motor 18 antreibbare Antriebsrad 51 an zwei einander diametral gegenüberliegenden Stellen. Der Scheibenreiniger 13 ist hier an zwei einander gegenüberliegenden Stellen 52 und 53 zum einem am einen innenliegenden Abschnitt 54 und zum anderen an einem außen liegenden Abschnitt 55 des Antriebsmittels 14 im waagrechter Lage befestigt, so daß durch Vertikalbewegung des Scheibenreinigers ein rechteckiges Reinigungsfeld erzielt wird. Die Seitenkanten der Scheibe 12 erstrecken sich zwischen den innenliegenden Abschnitten 54 und 56 des Antriebsmittels 14.

In Fig. 5 ist angedeutet, wie bei einer mittigen Anordnung eines Motors 18 zum Antrieb eines Scheibenreinigers oder mehrerer Scheibenreinigers mittels zweier endloser Antriebsmittel 14 und 14′ die Antriebsmittelführung bzw. -verlegung aussieht. Die beiden Antriebsmittel 14 und 14′ umschreiben hier jeweils ein Rechteck 14′ und 14′. Eines der beiden Rechtecke 14 und 14′, nämlich das Rechteck 14′, ist kleiner als das andere Rechteck 14. Es ist derart über dem Rechteck 14 verlegt, daß es dessen eine Seitenkante 57 mit seinen beiden Längskanten 58 und 59 kreuzt. Mit seiner unteren Längskante 59 tangiert es das Antriebsrad 51 des Motors 18 an einer in Fig. 5 oben liegenden Stelle, während das Rechteck 14′ das Antriebsrad 51 mit seiner unteren Längskante 60 an der dieser Stelle gegenüberliegenden Stelle tangiert. Die beiden Antriebsmittel 14 und 14′ werden dadurch gegenläufig angetrieben.

Der Scheibenreiniger 13 ist zum einen bei 61 an einem innerhalb des Antriebsmittels 14 verlaufenden Abschnitt 62 des Antriebsmittels 14′ und zum anderen bei 63 an einem innerhalb des Antriebsmittels 14′ verlaufenden Abschnitt 64 des Antriebsmittels 14 in waagrechter Lage befestigt. Somit kann er durch Vertikalbewegung ein rechteckiges Reinigungsfeld auf der Scheibe 12 säubern, deren Seitenränder sich zwischen den Abschnitten 62 und 64 der Antriebsmittel 14 und 14′ und deren Längsränder sich zwischen den Längskanten 58 und 59 des vom Antriebsmittel 14′ umschriebenen Rechtecks erstreckt.

Die in den Fig. 1 bis 5 dargestellten bzw. angedeuteten endlosen Antriebsmittel 14 und 14′ könnten zur Vermeidung von Längung bzw. Schrumpfung druch Temperatureinflüsse jeweils mit einer eingesetzten Zug-bzw. Druckfeder oder dergleichen als Nachstelleinrichtung ausgestattet werden.

Insbesondere bei Scheibenreinigungsanlagen mit vertikal angetriebenem(n) Scheibenwischer(n), die nicht mit einer Abhebemechanik ausgestattet sind, kann ein besserer Wasser- und/oder Wasserflüssigkeitsverteilung auf der Scheibe erreicht werden, wenn eine der folgenden Maßnahmen verwirklicht wird:

A.) Der beidendig an Antriebsmittel bzw. an Antriebsmitteln wie in den Fig. 1, 4 und 5 in waagrechter Richtung befestigte Scheibenreiniger wird zunächst nur an einem Ende angetrieben, das andere Ende wird erst angetrieben, wenn das eine Ende eine Schräglage von ungefähr 20 - 80 mm, je nach Scheibenbreite, gegenüber seiner Ausgangsstellung einnimmt. Entlang der von Scheibenreiniger gebildeten Schräge kann dann das Wasser und/oder die Waschflüssigkeit schnell abfließen. Der Rücklauf des Scheibenreinigers kann in der gleichen oder in der entgegengesetzten Schräglage vorgesehen werden.

B.) Der Scheibenreiniger 13 wird in Schräglage zur waagrechten 65 beidendig am Antriebsmittel 14 (vgl. Fig.6) oder an Antriebsmittel befestigt.

Die Sichtbarkeit der Verschmutzung der Scheibenbereiche, in denen die Scheibenwischerwendestellungen liegen, kann auf einfache Weise dadurch vermieden werden, daß die Scheibe dort weniger durchsichtigt gemacht, z.B. eingefärbt oder mit einem Farbbelag versehen wird. Eine solche Maßnahme beeinträchtigt die Sicht zumindest dann nicht, wenn die Wendepositionen, wie an sich üblich, in Scheibenrandbereichen liegen. Außerdem dürfte es bei einer herkömmlich breiten Wischblattausbildung genügen, wenn die weniger durchsichtigen Stellen etwa 10mm breit wären.

Zur Vermeidung einer Verschmutzung der Partie unterhalb einer Scheibe wird das Anbringen einer Wasserrille, die bei üblich großen Gebäudefensterscheiben vorzugsweise einen Querschnitt von maximal 6 x 15 mm haben sollte, und die eine seitliche Ablaufmöglichkeit z.B. in ein Rohr, das an eine Dachrinne angeschlossen ist, oder einen Anschluß an eine Absaugeinheit besitzt, vorgeschlagen.

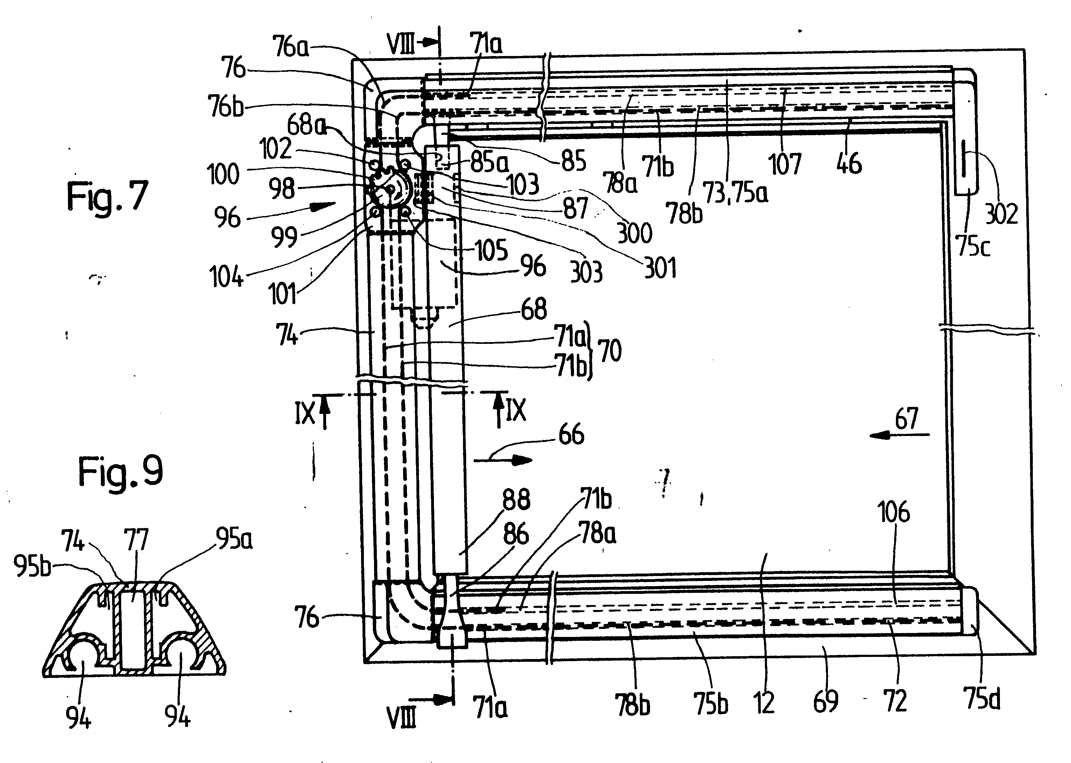

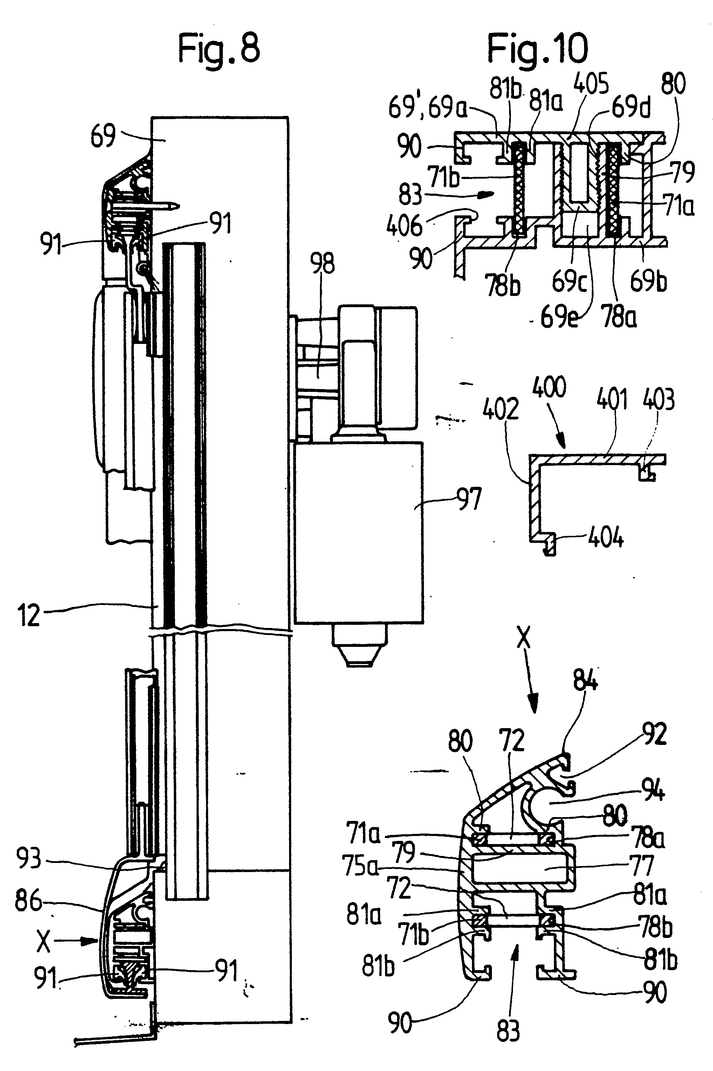

Die in der Fig. 7 dargestellte Scheibenreinigungsanlage ist eine Linearwischeranlage mit einem horizontal in den Pfeilrichtungen 66 und 67 über die Scheibe 12 bewegbaren Scheibenwischer 68. Die Scheibe 12 ist hier eine plane, rechteckige Isolierglasscheibe (vgl. Fig. 8), wie sie an Schaufenstern von Geschäftsgebäuden gebräuchlich sind, und ist in einem Rahmen 69 befestigt. Als Antriebsmittel 70 für den Scheibenwischer 68 sind zwei gleich ausgebildete Lochbänder 71a und 71b vorgesehen. Die Lochbänder 71a und 71b bestehen aus einem elastischen Kunststoff, sind flexibel, aber biegesteif und dienen als Zug-Druckmittel. Weiter sind sie im Querschnitt rechteckig und mit einer Vielzahl von in Längsrichtung hintereinander angeordneten, durchgehenden Löchern 72 versehen. Sie sind in einem Gehäuse 73 U-förmig um die Scheibe 12 herumgeführt, und zwar derart, daß sich im Bereich eines seitlichen Scheibenrandes, hier im Bereich des rechten Scheitenrandes, kein Gehäuse befindet. Das Gehäuse 73 ist aus fünf auf dem Rahmen 69 der Scheibe 12 mittels Schrauben befestigten Strangpreßprofilien 74, 75a, 75b und 76 zusammengesetzt, wobei das obere Profil 75a und das untere Profil 75b gleich ausgebildet und an den Enden durch eine Abdeckung 75c bzw. 75d verschlossen sind. Im Querschnitt ist jedes Profil 75a und 75 b aus einem rechtwinkligen Dreieck und einem Rechteck, das an eine der rechtwinklig zueinander verlaufenden Dreickseiten angrenzt, zusammengesetzt.

Im rechteckigen Bereich befinden sich übereinanderliegend und durch einen Schacht 77, durch welchen die Befestigungsschrauben führbar sind, voneinander getrennte, parallel zueinander verlaufende Führungen 78a und 78b für die Lochbänder 71a und 71b. Die nahe dem Dreieck verlaufende Führung 78a wird einerseits von einer Wand 79 des Schachts 77 und andererseits von zwei Schienen 80 gebildet, die zusammen weniger breit sind, als das von ihr geführte Lochband breit ist.

Die andere, nahe der dem Dreieck entfernten Kante verlaufende Führung 78b besteht dabei aus zwei oberhalb und unterhalb des von ihr geführten Lochbandes verlaufenden Schienen 81a und 81b, die weniger breit sind, als das Lochband breit ist, so daß dessen Löcher 72 ganz freistehen. Unterhalb dieser Führung 78b erstreckt sich entlang des Gehäuses 73 ein Schlitz 83. Die Profile 75a und 75b sind derart angeordnet, daß die Dreieckspitzen 84 oben und die Schlitze 83 unten verlaufen. Das Lochband 71a verläuft im oberen Profil 75a in der Führung 78a und im unteren Profil 75b in der Führung 78b. Das Lochband 71b verläuft im oberen Profil 75a in der Führung 78b und im unteren Profil 75b in der Führung 78a.

In jeden Schlitz 83 greift ein Mitnehmer 85 bzw. 86 für den Scheibenwischer 68 ein und an einem der Lochbänder 71a und 71b an. Der Mitnehmer 85 für das obere Ende 87 des Scheibenwischers 68 ist dabei im wesentlichen als ebene Platte ausgebildet und greift an dem Lochband 71b an. Der Mitnehmer 86 für das untere Ende 88 des Scheibenwischers 68 ist dabei im wesentlichen als gekrümmte Platte ausgebildet, übergreift das Profil 75b und greift von unten her zunächst durch eine im Bereich des Schlitzes 83 in einem Kanal 89, welcher oben von den unteren Schienen 81b, welche an ihren freien Enden nach unten abgebogen sind, und unten von gegengleich gebildeten Schienen 90 begrenzt wird, befestigte Dichtung 91 durch das Profil 75b und am Lochband 71a an. Diese beidendige Führungsart des Scheibenwischers 68 gewährleistet, daß kein Regenwasser oder dergleichen in die Profile 75a und 75b hineinlaufen und z.B. im Winter durch Einfrieren die Funktion der Lochbänder 71a und 71b und damit des ganzen Scheibenwischerantriebs beeinträchtigen könnte.

Wie die Fig. 7 zeigt, ragt dabei der Mitnehmer 85 mit einem bolzenartigen Ansatz 85a in ein Sackloch 68a des Scheibenwischers 68, das sich in Scheibenwischerlängsrichtung erstreckt. Das Sackloch 68a ist länger als der Ansatz 85a ausgebildet. Es können somit maßliche Toleranzen von Scheiben ausgeglichen werden, indem der Ansatz 85a unterschiedlich weit in das Sackloch 68a ragend in diesem fixiert wird.

Um eine unerwünscht große Länge von Sackloch 68a und Ansatz 85a zu vermeiden, könnten am anderen Ende 88 des Scheibenwischers 68 die gleichen Maßnahmen vorgesehen werden.

Selbstverständlich ist dieser Toleranzausgleichsmechanismus weder auf die in Fig. 7 dargestellte Vertikalwischeranlage noch auf Vertikalwischeranlagen überhaupt beschränkt.

Wie die Fig. 8 weiter zeigt, besitzen die Profile 75a und 75b im Bereich der dem rechteckigen Bereich fernen Spitze einen Führungskanal 92 für eine Gummileiste 93. Diese Gummileiste 93 verhindert, daß das Wasser oder dergleichen zwischen die Profile 75a und 75b und den Scheibenrahmen 69 eindringen kann. Unterhalb des Führungskanals 92 verläuft ein zum Rahmen 69 hin offener Leitungsschacht 94.

Die beiden Profile 75a und 75b sind über jeweils eine Profilecke 76, die bündig mit den Führungen 78a und 78b verlaufende Führung 76a und 76b für die Lochbänder 71a und 71b besitzt, mit dem linken Profil 74 verbunden.

Das linke Profil 74 ist im Umriß trapezförmig ausgebildet und mit zwei parallel nebeneinander verlaufenden, voneinander durch einen Schacht 77, durch den nicht dargestellte Befestigungsmittel (hier: Schrauben) zur Befestigung der Profile 75a und 75b am Scheibenrahmen 69 getrennte Führungen 95a und 95b für die Lochbänder 71a und 71b und mit Leitungsschächten 94 versehen. Das Lochband 71a verläuft in der weiter außen liegenden Führung 95a und das Lochband 71b in der weiter innen liegenden Führung 95b. Das Profil 74 reicht dabei nicht ganz bis zur oberen Profilecke 76. In dem Zwischenraum ist der Antrieb 96 für die Lochbänder 71a und 71b und damit für den Scheibenwischer 68 vorgesehen.

Der Antrieb 96 setzt sich aus einem drehrichtungsumkehrbaren Elektromotor 97 zusammen, wie er für Kraftfahrzeug-Scheibenwischeranlagen gebräuchlich ist, welcher auf der dem Betrachter der Fig. 1 abgewandten Seite des Scheibenrahmens 69 an diesem befestigt ist und mit seiner Abtriebswelle 98 durch den Rahmen 69 auf die andere Seite geführt ist. Auf der Abtriebswelle 98 ist eine Art Zahnrad 99 befestigt, und zwar besitzt das Rad 99 über seine Zylindermantelfläche verteilt mehre, hier zwölf Vorsprünge 100, welche maßlich auf die Löcher 72 der Lochbänder 71a und 71b abgestimmt sind.

Weiter ist in dem Zwischenraum ein hier vorne offen dargestelltes, tatsächlich aber durch einen Deckel verschlossenes Kästchen 101 am Scheibenrahmen 69 befestigt, in dem vier Führungsrollen 102, 103, 104 und 105 für die Lochbänder 71a und 71b befestigt sind. Die Führungsrollen 102 bis 105 sind derart voneinander beabstandet, daß je ein Paar oberhalb des Rades 99 liegt und jede der beiden Rollen 102 und 103 des Paares ein Lochband 71a bzw. 71b von oben an das Rad 99 andrückt und ein anderes Paar unterhalb des Rades 99 liegt und jede der beiden Rollen 104 und 105 des Paares ein Lochband 71a bzw. 71b von unten an das Rad 99 andrückt, und zwar derart, daß die Lochbänder 71a und 71b das Rad 99 jeweils über einen Winkel von etwa 110 Grad umschlingen. Dadurch ist ein wirkungsverlustarmer Antrieb gewährleistet.

Wie die Fig. 7 weiter zeigt, sind die Lochbänder 71a und 71b gleich lang, und zwar geringfügig länger als das aus einem Profil 75 a bzw. 75b plus dem Profil 74 plus den beiden Profilecken 76 zusammengesetzte Längenmaß. Dabei erstreckt sich das Lochband 71b, an welchem der Mitnehmer 85

für das obere Ende 87 des Scheibenwischers 68 angreift, wenn der Scheibenwischer 68 wie in Fig. 1 gezeigt, im Bereich des linken Scheibenrandes liegt, vollständig durch den unteren Führungskanal 78b des oberen Profils 75a, durch die obere Profilecke 76, das Profil 74, die untere Profilecke 76 und ein Stück in den oberen Führungskanal 78a des unteren Profils 75b. Der Führungskanal 78a des unteren Profils 75b ist somit in der gezeigten Scheibenwischerlage in dem übrigen Bereich 106 leer. Das andere Lochband 71a, an welchen der Mitnehmer 86 für das untere Ende 88 des Scheibenwischers 68 angreift, erstreckt sich, wenn der Scheibenwischer 68 wie in Fig. 1 gezeigt, liegt, vollständig durch den unteren Führungskanal 78b des unteren Profils 75b, durch die untere Profilecke 76, das Profil 74, die obere Profilecke 76 und ein Stück in den oberen Führungskanal 78a des oberen Profils 75a. Der Führungskanal 78a des oberen Profils 75a ist somit in der gezeigten Scheibenwischerlage in dem übrigen Bereich 107 leer.

Wenn sich die Abtriebswelle 98 des Elektromotors 97 dreht, werden die Lochbänder 71a und 71b gegenläufig und formschlüssig mittels des Rades 99 angetrieben und der Scheibenwischer 68 in Pfeilrichtung 66 bewegt. Das jeweils nicht unter Zuglast stehende Ende des Lochbandes 71a bzw. 71b wird in den jeweils leeren Bereich des Führungskanals 75a bzw. 75b geschoben. Bei der Drehung der Antriebswelle 98 im Uhrzeigersinn wird also das im Führungskanal 78b des unteren Profils 75b befindliche Ende des Lochbandes 71a in den leeren Bereich 107 des Führungskanals 78b des oberen Profils 75a und das im Führungskanal 78b des oberen Profil 75a befindliche Ende des Lochbandes 71b in den leeren Bereich 106 des Führungskanals 78b des unteren Profil 75b geschoben.

Wenn der Scheibenwischer 68 den rechten seitlichen Rand der Scheibe 12 erreicht hat, wird der Motor 97 umgepolt, und zwar durch Magnete 300, 301 am Scheibenwischer 68, die Reed-Schalter 302, 303 betätigen, die in der Abdeckung 75c des oberen Profils 75a bzw. im Kästchen 101 angeordnet sind. Der Scheibenwischer 68 wird anschließend in Pfeilrichtung 67 und Lochbänder 71a und 71b werden in die in Fig. 7 gezeigten Positionen bewegt, wo wieder eine Umpolung stattfindet, falls nicht der Wischeranlagenbetriebsschalter in die Aus-Stellung gebracht wird.

Wie die Fig. 7 weiter zeigt, ist unterhalb des Profils ein Sprührohr 46 angebracht, das Waschflüssigkeit führt. Das Sprührohr 46 ist gleich wie das in Fig. 1 dargestellte ausgebildet, weswegen an dieser Stelle auf eine Beschreibung der Sprührohrs 46 verzichtet wird.

Das Sprührohr 46 und der Elektromotor 97 können jeweils durch eine nicht dargestellte Flüssigkeits- bzw. Stromleitung, welche durch einen Leitungsschacht 94 geführt ist, sicher und formschön versorgt werden. Insgesamt ist somit mit der in den Fig. 7 bis 9 dargestellten Scheibenwischeranlage eine hervorragende Reinigung von Scheiben möglich.

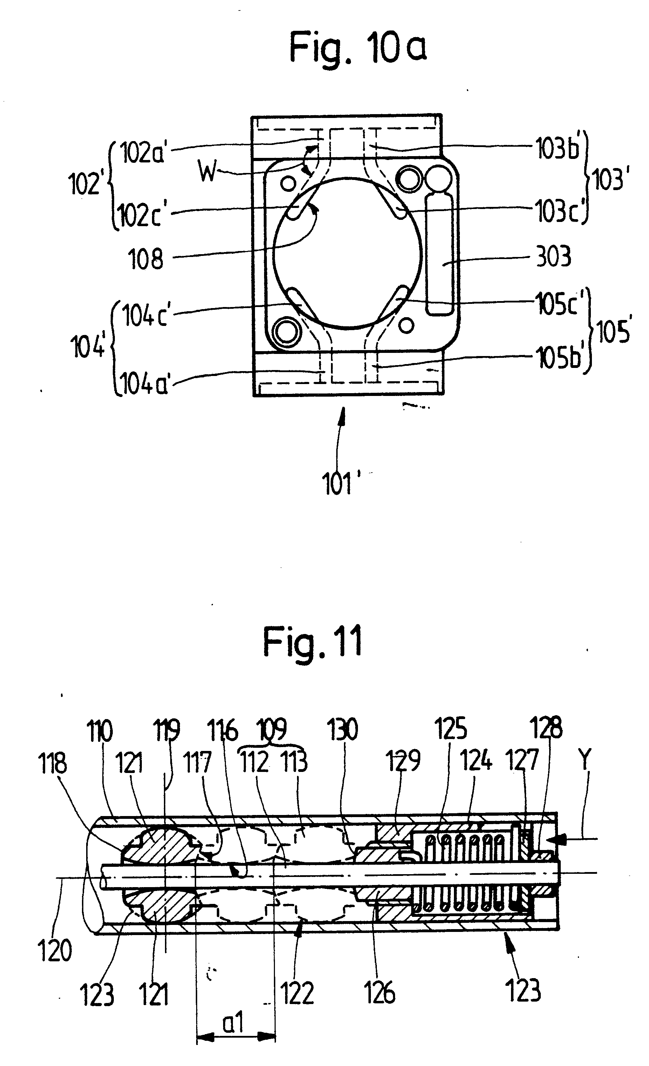

In Figur 10 ist angedeutet, wie bei einer Scheibenreinigungsanlage mit um die Scheibe geführten flexiblen Antriebsmitteiln eine aufzuschraubende Profilführung für dieselben entfallen kann. Die Antriebsmittel sind hier in einerm speziell ausgebildeten Scheibenrahmen 69′ geführt. Der im Querschnitt quaderförmige Scheibenrahmen 69′ setzt sich aus zwei miteinander verrasteten Profilen 69a und 69b zusammen.

Eines der Profile 69a und 69b, nämlich das Profil 69a, besitzt etwa mittig einen hohlen Rastfortsatz 69c mit einer Außenverzahnung 69d. Er greift in eine Nut 69a ein, die in das andere Profil 69b eingelassen ist. Diese Rastverbindung 69d, 69e trennt zwei Führungen 78a und 78b für zwei Lochbänder 71a und 71b. Sowohl die Führungen 78a und 78b als auch die Lochbänder 71a und 71b sind gleich wie die anhand der Fig. 8 dargestellten und demgemäß hier mit den gleichen Bezugzeichen versehen. Bezüglich ihrer Beschreibung wird auf die der Fig. 8 verwiesen. Abweichend davon ist jedoch die Wand 79 hier eine Begrenzungswand der Nut 63e. Dabei ist vorgesehen, daß die Lochbänder 71a und 71b in das Profil 69b eingelegt werden und anschließend das Profil 69a aufgerastet wird. In dem Bereich, wo die Profile 69a und 69b den seitlichen Scheibenrahmenbereich bilden, also anstelle des in Fig. 9 dargestellten Profils 74 verwendet werden, wo also kein Mitnehmer durchtreten braucht, wird der Schlitz 83 durch einen Deckel 400 verschlossen. Der Deckel 400 ist im Querschnitt etwa L-förmig und besitzt an beiden L-Schenkeln 401 und 402 Rasthaken 403 und 404. Mit dem Schenkel 401 kommt der Deckel 400 dann zur Anlage an der Außenwand 405 des Profils 69a und greift mit den Rasthaken 403 in nicht dargestellte Rastlöcher in der Wand 405 ein. Der Schenkel 402 überdeckt dann den Schlitz 83; die Rasthaken 404 ergreifen das freie Ende 406 der innenliegenden Schiene 90 des Profils 69b. Diese Ausführungsform zeichnet sich dadurch aus, daß weitgehend das übliche Scheibenaussehen mit ebenen Rahmenflächen erhalten ist.

In Fig. 10a ist ein Kästchen 101′ dargestellt, welches anstelle des in Fig. 7 dargestellten Kästchens 101 verwendet werden kann. Hier ist auch der Reed-Schalter 303 gezeigt. Anstelle von Führungsrollen besitzt das Kästchen 101′ Führungsstege für die Lochbänder. Die Führungsstege 102′, 103′, 104′ und 105′ verlaufen zunächst mit einem äußeren, geraden Abschnitt 102a′, 103b′, 104a′ und 105b′ seitlich außen neben den Führungen 76a und 76b der oberen Profilecke 76 bzw. den Führungen 95a und 95b des linken Profils 74 (Fig. 7). An die geraden Abschnitte 102a′, 103b′, 104a′ und 105b′ schließt sich jeweils ein um einen Winkel W von etwa 135 Grad seitlich nach außen abgewinkelter Abschnitt 102c′, 103c′, 104c′ bzw. 105c′ an. Die Innenflächen 108 der abgewinkelten Abschnitte 102c′, 103c′, 104c′ und 105c′ verlaufen in einem geringen Abstand von etwa 1 mm zu einer die Zähne 100 des hier nicht dargestellten Zahnrades 99 berührenden Tangente. Dabei reichen die abgewinkelten Abschnitte 102c′, 103c′, 104c′ und 105c′ etwa halb so weit wie die radiale Ausdehnung des Zahnrades. Die Führungsstege 102′, 103′, 104′ und 105′ führen demgemäß die Lochbänder dem Zahnrad derart zu, daß ein großer Umschlingungswinkel und dadurch ein Antrieb der Lochbänder mit hohem Wirkungsgrad möglich ist.

Bei einer weiteren, nicht dargestellten Ausführungsform besitzt das Kästchen anstelle der Führungsstege vier Führungsschlitze für die Lochbänder. Die Führungsschlitze sind im wesentlichen gleich wie die zuvor beschriebenen Führungsstege ausgebildet, besitzen aber bündig mit den Führungen 76a und 76b der oberen Profilecke 76 bzw. den Führungen 95a und 95b des linken Profils 74 (Fig. 7) verlaufende, äußere gerade Abschnitte.

Bei beiden letztgenannten Ausführungsformen ist das Kästchen 101′ vollständig aus einem nicht allzu harten Kunststoff hergestellt. Somit ist nicht zu befürchten, daß die Führungsstege 102′, 103′, 104′ und 105′ bzw. die Führungsschlitze im Gegensatz zu solchen, die aus Metall bestehen, die Lochbänder beschädigen können.

In den Fig. 11 bis 13 sind ein flexibles Antriebsmittel 109, ein Gehäuse 110 und ein Antriebsrad 111 dargestellt, die prinzipiell ebenfalls bei den zuvor beschriebenen Scheibenreinigungsanlagen eingesetzt werden können. Wie die Fig. 11 zeigt, setzt sich das flexible Antriebsmittel 109 aus einem Stahlseil 112 und einer Vielzahl von im wesentlichen kugelförmigen Gliedern 113 zusammen, die aus einem Kunststoff mit guten Gleiteigenschaften spritzgegossen und lose auf dem Seil 112 aufgereiht sind.

Die Glieder 113 besitzen einen kreisscheibenartigen Grundkörper 114 mit einer nach außen gewölbten Mantelfläche 115. Dieser Grundkörper 114 wird mittig seiner Höhenerstreckung H diametral von einer Zylindrischen Bohrung 116 durchsetzt, die sich an beiden Enden konisch erweitert.

Jedes der Glieder 113 besitzt im Bereich eines Endes der Bohrung 116 und damit an einer Stirnfläche eine kugelpfannenförmige Vertiefung 117 in der Mantelfläche 115 des Grundkörpers 114, die sich über die gesamte Höhe H des Grundkörpers 114 erstreckt und im übrigen maßlich auf die Mantelfläche 115 eines ihm benachbarten Gliedes abgestimmt ist.

Die Glieder 113 sind derart auf das Seil 112 aufgereiht, daß die Vertiefungen 117 alle in die gleiche Richtung zeigen und demgemäß jedes Glied 113 mit der der Vertiefung 117 gegenüberliegenden, von einer Stirnfläche gebildeten Stelle 118 der Mantelfläche 115 in der Vertiefung 117 des ihm unmittelbar benachbarten Gliedes lagert. Die Glieder 113 sind demgemäß nach Art eines Kugelgelenks an den Stirnflächen 117 und 118 gelenkig aneinander gelagert und können problemlos um eine gedachte geometrische Achse 119 kippen, welche die sich mittig in Längsrichtung durch das Seil 112 und die Glieder 113 erstreckende Antriebsmittelachse 120 rechtwinklig schneidet. Das trägt zur guten Beweglichkeit des Antriebsmittels 109 um stark gewinkelte Abschnitte der zu reinigenden Scheibe bei.

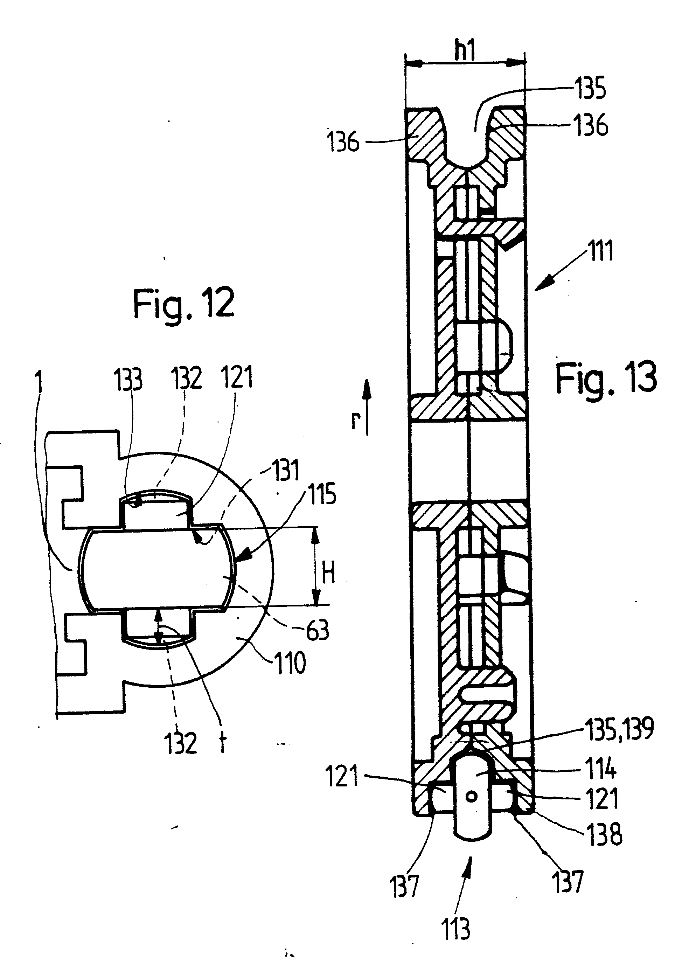

Wie die Fig. 11 und 12 zeigen, erstreckt sich vom Grundkörper 114 der Glieder 113 beidseitig jeweils ein Zapfen 121 nach außen weg, d.h. in Radialrichtung der Achse 120. Die Zapfen 121 sind zylindrisch und besitzen am äußeren Ende jeweils eine nach außen gewölbte Grundfläche 122. Sie sind so lang, daß die Glieder 113 im gedachten Umriß 123 kugelförmig sind. Wegen der beschriebenen Ausbildung der Grundflächen 122 liegen die Glieder 113, wie die Fig. 12 deutlich zeigt, in Längsrichtung bzw. in Richtung der Achse 12 betrachtet, oben und unten jeweils nur punktuell am Gehäuse 110 an.

Diese Maßnahme trägt ebenfalls zur problemlosen Verschwenkbarkeit der Glieder 113 gegeneinander und zur problemlosen Beweglichkeit der Glieder 113 um die stark gewinkelten Scheibenecken bei. Überhaupt ist das Antriebsmittel 109 insgesamt so flexibel, daß es problemlos zu über in verschiedenen Stockwerken oder nebeneinander angeordneten Scheiben verlegt werden kann.

Zur Sicherung der zuvor beschriebenen Lagerung der Glieder 113 aneinander dient eine stellenrichtung 129, die in einem Endbereich des flexiblen Antriebsmittels 109 vorgesehen ist. Die Stelleinrichtung 123 setzt sich aus einem rohrförmigen Halter 124, welcher in das rohrförmige Gehäuse 110 eingeklemmt ist, einem Federelement 125 und einem Stellglied 126 zusammen.

Das Federelmennt 125 ist als Schraubendruckfeder ausgebildet, umgibt das Seil 112, stützt sich mit einem ersten Ende an einem kreisringscheibenartigen, den Halter 124 an einem ersten Ende begrenzenden Abstützelement 127, das andererseits mittels eines fixen Nippels 128 das Seil 122 in Richtung der Achse 120 beweglich führt, ab und ist mit einem zweiten Ende, das sich in Richtung der Achse 120 der Antriebsvorrichtung erstreckt, in eine Öffnung des im wesentlichen zylindrischen, in Achsrichtung von dem Seil 112 durchsetzten Stellglieds 126 eingeklemmt. An seiner äußeren Zylindermantelfläche ist das Stellglied 126 mit einem Gewinde versehen. Der Halter 124 besitzt an seinem zweiten Ende eine einstückig angeformte Mutter 129 mit einem Gegengewinde zu dem Stellgliedgewinde. Über die so gebildete Schraubverbindung wird das Stellglied 126 durch das Federelement 125 unterstützt in Pfeilrichtung Y auf dem Seil 112 bewegt, so daß es immer an das ihm benachbarte Glied 113 gedrückt wird, welches wiederum den auf es ausgeübten Druck auf das ihm benachbarte Glied weitergibt usw. bis zum nicht dargestellten letzten Glied des Antriebsmittels 109.

Hier kann entweder ein Anschlag für das letzte Glied oder eine Stelleinrichtung vorgesehen sein, die wie die beschriebene Stelleinrichtung aufgebaut, jedoch entgegengesetzt wirkend angeordnet ist.

Zu erwähnen ist noch, daß das Stellglied 126 an seiner dem Glied 31 zugekehrten Grundfläche 130 gegengleich zur Vertiefung 117 ausgebildet ist, so daß das Glied 113 und das Stellglied 126 ebenfalls nach Art eines Kugelgelenks aneinander gelagert sind. Die Führung der Glieder 113 entlang des rohrförmigen Gehäuses 110 ist dabei optimal, weil dieses wie nachfolgend beschrieben erfindungsgemäß ausgestaltet ist.

Wie die Fig. 12 zeigt, sind in die innere Mantelfläche 139 des Gehäuses 110 an zwei einander gegenüberliegenden Stellen zwei Längsnuten 132 eingelassen. Die Längsnuten 132 stellen Führungsprofile für die Glieder 109 des Antriebsmittels 109 dar, und zwar dient jede Längsnut 132 Aufnahme eines Zapfens 121. Die Längsnuten 132 besitzen eine Tiefe t, welche geringfügig größer als die Höhe der Zapfen 121 ist. Weiterhin sind die Nuten 132 maßlich auf die übrigen Maße der Zapfen 123 abgestimmt und besitzen auch gewölbte Grundflächen 133.

In den seitlich der Nuten 132 liegenden Bereichen 134 ist die innere Mantelfläche 131 des Gehäuses 110 derart geformt, daß die Flächen der Grundkörper 114 der Glieder 113 in ganz geringen Abstand dazu verlaufen.

Aufgrund dieser aufeinander abgestimmten Ausbildung von Antriebsmittel 109 und Gehäuse 110 ist eine absolut sichere, geräuscharme Antriebsmittelführung gewährleistet.

Insgesamt besitzt das Gehäuse 110 somit vier Längsnuten, die eine Führung jedes Gliedes 113 an vier gleichmäßig über den Umfang verteilten, nämlich an zwei einander gegenüberliegenden Zapfen 121 und an zwei einander gegenüberliegenden Stellen des Grundkörpers 114 ermöglichen.

Wie die Fig. 12 weiter zeigt, ist in einem Bereich des Gehäuses 110 ein Längsschlitz 1 vorgesehen. Dieser ermöglicht den Durchtritt von nicht dargestellten Mitnehmern für den Scheibenwischer.

Insbesondere bei den in den Fig. 7 bis 10, 11 und 12 gezeigten Gehäusen 75, 69' und 110, die also die flexiblen Antriebsmittel 71a, 71b bzw. 109 eng umgeben, wird zur Vermeidung von Witterungseinflüssen auf die flexiblen Antriebsmittel empfohlen, ein flüssiges oder gasförmiges, gegebenenfalls erwärmtes Medium vorzugsweise mit Überdruck durch das Gehäuse zu leiten. Dabei können bei dem Gehäuse 75 bzw. 69' beide Antriebsmittel 71a und 71b gleichzeitig temperiert werden, wenn das Durchleiten des Mediums im Schacht 77 bzw. in der durch den Rastfortsatz 69c teilweise verschlossenen Nut 69e, also zwischen den Antriebsmitteln, erfolgt.

Das in Fig. 13 dargestellte Antriebsrad 111 für das flexible Antriebsmittel 109 besitzt ringsum mehrere profilierte Mittel 135, von denen jedes zum Antrieb des flexiblen Antriebsmittels 109 an den Gliedern 113 dient und zwar an den profilierten Bereichen, nämlich den Zapfen 121. Diese erfüllen demgemäß eine Doppelfunktion, nämlich als Führungsmittel und als eine Art Antriebszähne. Dabei laufen die Glieder 113 derart zum Antriebsrad 111, daß die Zapfen 121 in Richtung der Höhenerstreckung h1 des Antreibsrades verlaufen. Die Mittel 135 sind als in Radialrichtung r des Antriebsrades 111 offene Ausnehmungen ausgebildet. Speziell besitzt jede Seite des Antriebsrades 111 Zähne 136 und Zahnlücken 137, die jeweils einander gegenüberliegend angeordnet sind.

Die Zahnlücken 137 sind etwa U-förmig und in ihrer Gestalt und Ausdehnung an diejenige der Zylindermantelfläche der Zapfen 121 angepaßt. Seitlich sind die Zahnlücken 137 durch Radmaterial 138 begrenzt. Die Zapfen jedes mit dem Antriebsrad 111 im Eingriff stehenden Gliedes 113 liegen über ihre gesamte Höhe und diametrale Ausdehnung in den Zahnlücken 137.

Unterhalb der Zähne 136 und Zahnlücken 137, d.h. weiter in Richtung der Mitte des Antriebsrades 111, bildet eine umlaufende Nut 139 einen Teil der Ausnehmungen 135. Diese Nut 139 ist der Gestalt des kreisscheibenartigen Grundkörpers 114 des Gliedes 113 angepaßt, so daß das Glied 113 über die radiale Ausdehnung des Grundkörpers 114 darin liegt. Einander benachbarte Zähne 136 des Antriebsrades 111 besitzen dabei einen Abstand voneinander, welcher dem Abstand a1 (Fig. 11) der die Kugelgelenke bildenden Stellen 117 und 118 zweier benachbarter Glieder 113 entspricht.

Insgesamt ist somit sehr sicher gewährleistet, daß jedes Glied 113 exakt mit dem Antriebsrad 111 in Eingriff kommen kann und daß mehrere benachbarte Glieder 113 gleichzeitig mit dem Antriebsrad 111 in Eingriff kommen können. Dadurch ist ein wirkungsvoller Antrieb des Antriebsmittel 109 und des von ihm anzutreibenden Bauteils, nämlich eines Scheibenreinigers möglich.

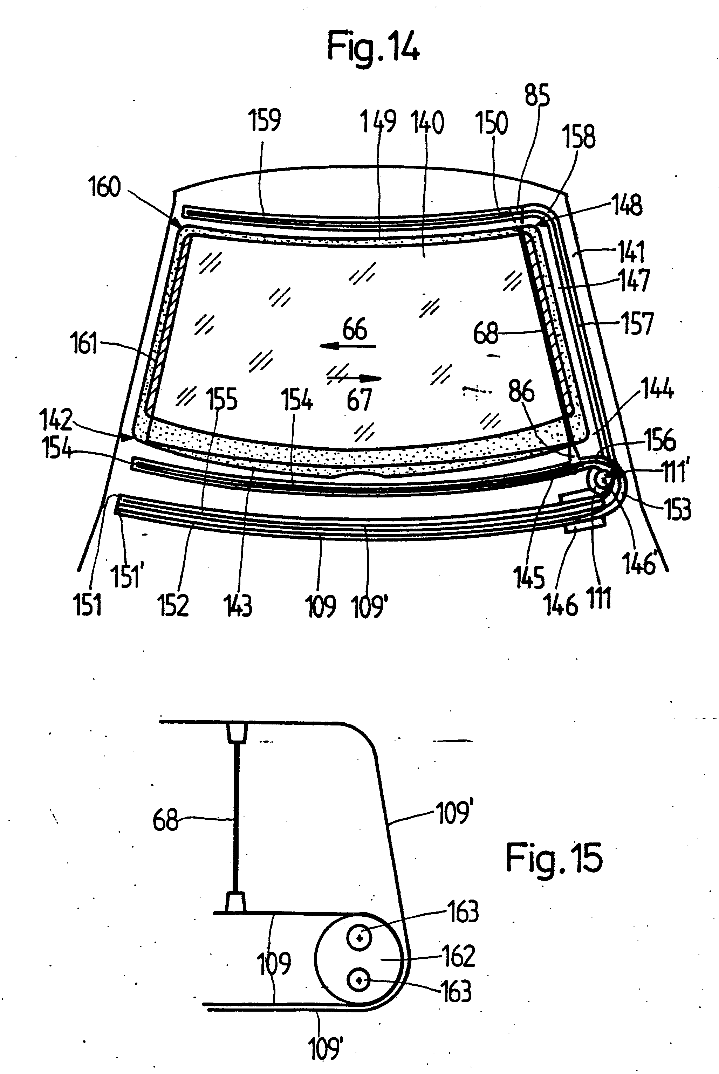

In Fig. 14 ist eine Scheibenreinigungsanlage prinzipiell dargestellt, welche zum Reinigen der Windschutzscheibe 140 eines Kraftfahrzeugs 141 vorgesehen ist. Diese Scheibenreinigungsanlage ist wie die in Fig. 7 dargestellte eine Linearwischeranlage mit einem horizontal in den Pfeilrichtungen 66 und 67 über die Scheibe 140 bewegbaren Scheibenwischer 68. Die Scheibe 140 ist hier trapezförmig ausgebildet.

Als Antriebsmittel für den Scheibenwischer 68 sind zwei gleich ausgebildete, flexible, aber biegesteife Zug-/Druckelemente 109 und 109' vorgesehen. Diese könnten Stahlseile, Zahnriemen oder dergleichen sein, sind aber hier gleich dem zuvorbeschriebenen Antriebsmittel 109, das sich aus einem Seil und einer Vielzahl von im wesentlichen kugelförmigen Gliedern zusammensetzt, die lose auf dem Seil aufgereiht sind.

Die Antriebsmittel 109 und 109' sind U-förmig verlegt, und zwar derart, daß das eine, welches mit dem Bezugszeichen 109 bezeichnet ist, unterhalb der einen unteren Scheibenecke, hier: der linken unteren Scheibenecke 142 geradeaus unterhalb des unteren Scheibenrandes 143 bis über die andere untere Scheibenecke 144 hinaus verläuft, ein in deren Bereich angeordnetes Antriebsrad 111 umschlingt, und kurz hinter diesem bei 145 endet. Hier greift das untere Ende des Scheibenwischers 68 über einen Mitnehmer 86 am Antriebsmittel 109 an. Das andere, mit dem Bezugszeichen 109' bezeichnete Antriebsmittel verläuft zunächst parallel oberhalb des Antriebsmittels 109 bis über die untere rechte Scheibenecke 144 hinaus, in deren Bereich es ein Antriebsrad 111' umschlingt, welches kleiner als das Antriebsrad 111 und mit diesem auf einer gemeinsamen Antriebswelle 146' angeordnet ist, welche die Abtriebswelle eines umpolbaren Elektromotors 146 ist. Hinter dem Antriebsrad 111' verläuft das Antriebsmittel 109' entlang des rechten, seitlichen Scheibenrandes 147, anschließend um die rechte obere Scheibenecke 148 und noch ein Stück parallel zum oberen Scheibenrand 149 und endet dann bei 150. Hier greift das obere Ende des Scheibenwischers 68 über einen Mitnehmer 85 am Antriebsmittel 109' an. Zwischen dem Scheibenwischer 68 und den Mitnehmern 85, 86 ist ein nicht dargestellter Mechanismus zum Längenausgleich des Scheibenwischers 68 während der Bewegungsabläufe vorgesehen.

Sowohl das Antriebsmittel 109 als auch das Antriebsmittel 109' sind jeweils in einem U-förmigen Führungskanal bzw. Gehäuse 151 bzw. 151' geführt. Das Gehäuse 151 für das Antriebsmittel 109, an welchem der Scheibenwischer 68 über seinen am unteren Ende angeordneten Mitnehmer 86 angreift, verläuft dabei von einer unterhalb der linken unteren Scheibenecke 142 liegenden Stelle mit einem geraden Abschnitt 152 parallel zum unteren Scheibenrand 143, dann im Bereich des Antriebsrades 111 mit einem gekrümmten Abschnitt 153 im Gegenuhrzeigersinn um dieses und anschließend mit einem geraden Abschnitt 154 oberhalb des Abschnitts 152 zur linken unteren Scheibenecke 142. Das Gehäuse 151' für das Antriebsmittel 109', an welchem der Scheibenwischer 68 über seinen am oberen Ende angeordneten Mitnehmer 85 angreift, verläuft mit einem ersten geraden Abschnitt 155 oberhalb des Abschnitts 152 des Gehäuses 151, dann im Bereich des Antriebsrades 111' mit einem gekrümmten Abschnitt 156 im Gegenuhrzeigersinn um dieses, weiter mit einem geraden Abschnitt 157 entlang des rechten, seitlichen Scheibenrandes 147, anschließend mit einem gekrümmten Abschnitt 158 im Gegenuhrzeigersinn um die rechte obere Scheibenecke 148 und schließlich mit einem geraden Abschnitt 159 parallel zum oberen Scheibenrand 149 bis in den Bereich der linken oberen Scheibenecke 160. In der Praxis sind dabei in Gehäuse 151 und 151', von unten her betrachtet, bis zum Abschnitt 154 des Gehäuses 151 von Karosserieteilen abgedeckt.

Wenn sich der Scheibenwischer 68 in der in Fig. 14 dargestellten Position befindet, sind der Abschnitt 154 des Gehäuses 151 zur Führung des mit dem unteren Ende des Scheibenwischers 68 verbundenen Antriebsmittels 109 und der Abschnitt 159 des Gehäuses 151' zur Führung des mit dem oberen Ende des Scheibenwischers 68 verbundenen Antriebsmittels 109' leer. Wenn sich die Antriebswelle 146' und damit jedes Antriebsrad 111 und 111' im Gegenuhrzeigersinn dreht, werden die Antriebsmittel 109 und 109' und damit der Scheibenwischer 68 in Pfeilrichtung 66 nach links bewegt. Der am unteren Ende des Scheibenwischers 68 befindliche Mitnehmer 86 wird dabei schneller bewegt als der am oberen Ende des Scheibenwischers 86 befindliche Mitnehmer 85, da das Antriebsmittel 109 für den Mitnehmer 86 mit dem größeren Antriebsrad 111 zusammenwirkt. Das Größenverhältnis der Antriebsräder 111 und 111' ist dabei derart auf die Trapezform der Scheibe 140 abgestimmt, daß der Mitnehmer 86 fast die linke untere Scheibenecke 142 erreicht hat, wenn der Mitnehmer 85 fast die linke obere Scheibenecke 152 erreicht hat. Demgemäß wird auf der Scheibe 140 ein trapezförmiges Wischfeld erzielt, das fast vom rechten seitlichen Scheibenrand 147 bis zum linken seitlichen Scheibenrand 161, und, da der Scheibenwischer 68 einen relativ langen Wischgummi besitzt, fast vom oberen Scheibenrand 149 bis nahe zum unteren Scheibenrand 143 reicht. Dann sind der Abschnitt 152 des Gehäuses 151 und der Abschnitt 154 des Gehäuses 151' leer.

Wenn der Scheibenwischer 68 auf die zuvor beschriebene Weise fast den linken seitlichen Scheibenrand 161 erreicht hat, wird der Motor 146 umgepolt, so daß sich die Antriebswelle 146' und damit jedes Antriebsrad 111 und 111' im Uhrzeigersinn dreht, und es werden die Antriebsmittel 109 und 109' und damit der Scheibenwischer 68 in Pfeilrichtung 67 nach rechts bewegt.

Ein besonderer Vorteil dieser Scheibenreinigungsanlage ist, daß aufgrund der zuvor beschriebenen Anordnung des Motors 146 unterhalb der Scheibenecke 144, aber im Bereich der Längenausdehnung der Scheibe 140 bzw. der Breitenausdehnung des Fahrzeugs 141, die Antriebsmittel 109 und 109' überall, wie zuvor beschrieben, nahe der zu reinigenden Scheibe 140 verlaufen können und weder seitlich noch ober- oder unterhalb der Scheibe 140 außerhalb der üblichen Fahrzeugmaße bzw. in einen ungünstigen Fahrzeugraum hin, z.B. in den Motorraum hin, Ausweichraum benötigen. Der gleiche Effekt wäre natürlich erzielbar, wenn der Motor 146 bzw. ein anderer Motor im Bereich einer anderen als der dargestellten Scheibenecke, z.B. unterhalb der Scheibenecke 142 oder oberhalb der Scheibenecke 152 und im Bereich der Längenausdehnung der Scheibe 140 angeordnet wird. (Die Antriebsmittel 109 und 109' sowie Gehäuse 151 und 151' müßten dann spiegelbildlich zu Fig. 14 angeordnet werden.) Die letztgenannte Variante wäre für Fahrzeuge mit großem Überbau über der Scheibe geeignet, z.B. für Lastkraftwagen. Die Scheibenreinigungsanlage beruht somit auf dem Grundgedanken, den Antrieb (Antriebsrad bzw. -räder und Motor) in einem Umkehrbereich des Scheibenwischers, aber ober- bzw. unterhalb versetzt zu und innerhalb der Längenausdehnung seiner Bewegungsbahn anzuordnen und dadurch eine günstige Antriebsmittelverlegung erzielen zu können.

In Fig. 15 ist prinzipiell dargestellt, wie der Scheibenwischer 68 anstelle wie in Fig. 14 mittels zweier ungleich großer Antriebsräder 111 und 111' mit zwei gleich großen Antriebsrädern 162 (in Fig. 15 ist nur eines davon dargestellt) angetrieben werden kann. Und zwar ist hier ein Vorgelege 163 vorgesehen, und zwar derart, daß sich das mit dem unteren Mitnehmer 86 und damit mit dem unteren Ende des Scheibenwischers 68 über das Antriebsmittel 109 zusammenwirkende Antriebsrad 162 schneller dreht als das andere Antriebsrad.

Diese Scheibenreinigungsanlage hat neben den zuvor bei Fig. 14 genannten Vorteilen eben der Vorteil, daß nicht zwei Antriebsräder in aufeinander abgestimmten Größen hergestellt bzw. beschafft werden müssen. Dies bringt vor allem bei solchen Reinigungsanlagen Preisvorteile, die ein anhand der Fig. 11 bis 13 beschriebenes, speziell profiliertes Antriebsrad besitzen.

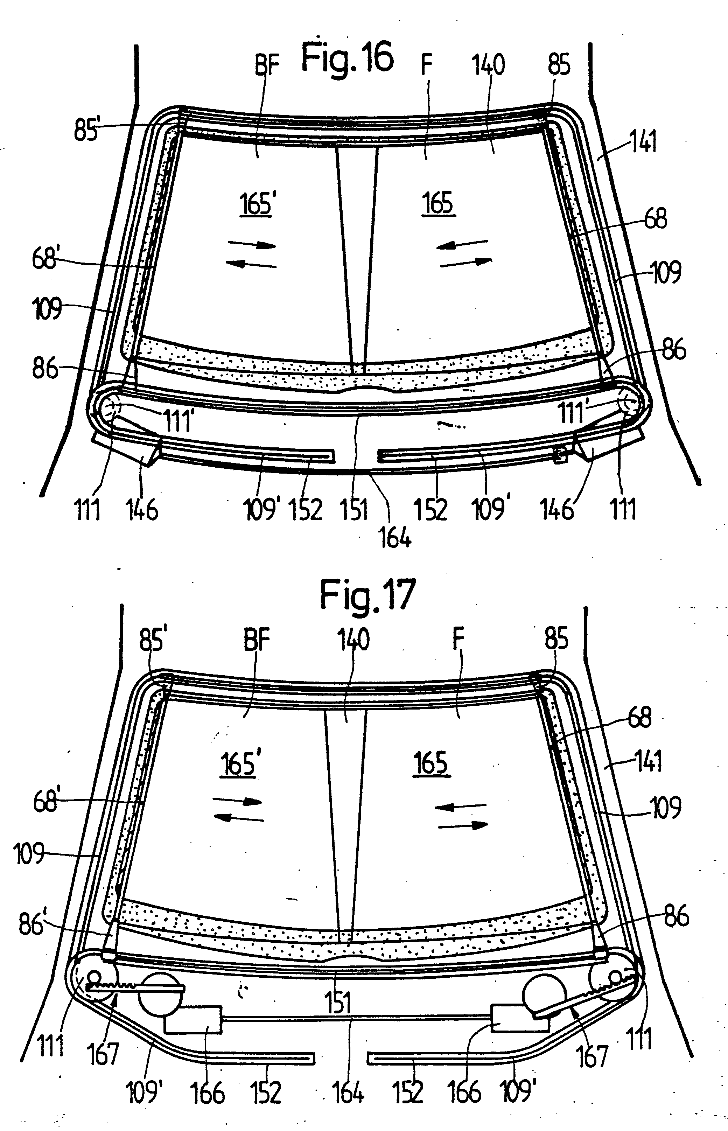

In Fig. 16 ist eine weitere Scheibenreinigungsanlage prinzipiell dargestellt, die zum Reinigen einer trapezförmigen Scheibe ausgebildet ist. Die Scheibe ist hier wieder - wie in dem anhand von Fig. 14 beschriebenen Beispiel - die Windschutzscheibe 140 eines Kraftfahrzeuges 141.

Im Unterschied zu der anhand von Fig. 14 beschriebenen Anlage besitzt die Anlage zwei Scheibenwischer 68 und 68′, deren Parkstellung im Bereich des rechten seitlichen Scheibenrandes 147 bzw. des linken seitlichen Scheibenrandes 161 vorgesehen ist. Diese sind wiederum beidendig über jeweils einen Mitnehmer 85 bzw. 85′ und 86 bzw. 86′ mit zwei gleich ausgebildeten, flexiblen, aber biegesteifen Zug-Druckelementen 109 und 109′ als Antriebsmittel verbunden, die gleichartig wie die anhand der Fig. 14 beschriebenen verlegt und antreibbar sind. Sie sind lediglich spiegelbildlich zueinander angeordnet und der Abschnitt 152 des Gehäuses 151 ist kürzer als bei Fig. 14 ausgebildet.

Die einzelnen Bauteile der Scheibenreinigungsanlage, die gleich wie bei der in Fig. 14 dargestellten ausgebildet sind, sind in Fig. 16 mit den gleichen Bezugszeichen wie in Fig. 14 versehen. Bezüglich ihrer Beschreibung wird auf die der Fig. 14 verwiesen.

Die Elektromotoren 146 sind über eine zuschaltbare Synchronwelle 164 miteinander verbunden. Die Scheibenreinigungsanlage ist derart elektrisch geschaltet, daß der Scheibenwischer 68 ein trapezförmiges Feld 165 auf der Fahrerseite F und der Scheibenwischer 68′ ein trapezförmiges Feld 165′ auf der Beifahrerseite BF des Kraftfahrzeugs 141 reinigen kann.

Die in Fig. 17 prinzipiell dargestellte Scheibenreinigungsanlage ist wiederum im wesentlichen gleich der in Fig. 16 dargestellten ausgebildet. Sie ist ebenfalls eine Linearwischeranlage mit zwei horizontal über die scheibe 140 antreibbaren Scheibenwischern 68 und 68′. Die einzelnen Bauteile der Scheibenreinigungsanlage, die gleich wie die bei der in Fig. 16 bzw. 14 dargestellten Scheibenreinigungsanlage ausgebildet sind, sind in Fig. 17 mit den gleichen Bezugszeichen wie dort versehen. Bezüglich ihrer Beschreibung wird auf die Fig. 16 bzw. 14 verwiesen.

Der wesentliche Unterschied zwischen dieser Scheibenreinigungsanlage und den zuvor beschriebenen ist der, daß hier zwei Elektromotoren 166 vorgesehen sind, die jeweils über ein Zahnstangengetriebe 167 mit den Antriebsrädern 111 bzw. 111′ für die Antriebsmittel 109 und 109′ und damit für die Scheibenwischer 68 bzw. 68′ wirkverbunden sind. Untereinander sind die Elektromotoren 166 durch eine zuschaltbare Synchronwelle 164 miteinander verbunden. Dabei sind sie gegenläufig antreibbar.

Diese Scheibenreinigungsanlage hat den Vorteil, daß keine Motorenumpolung nötig ist.

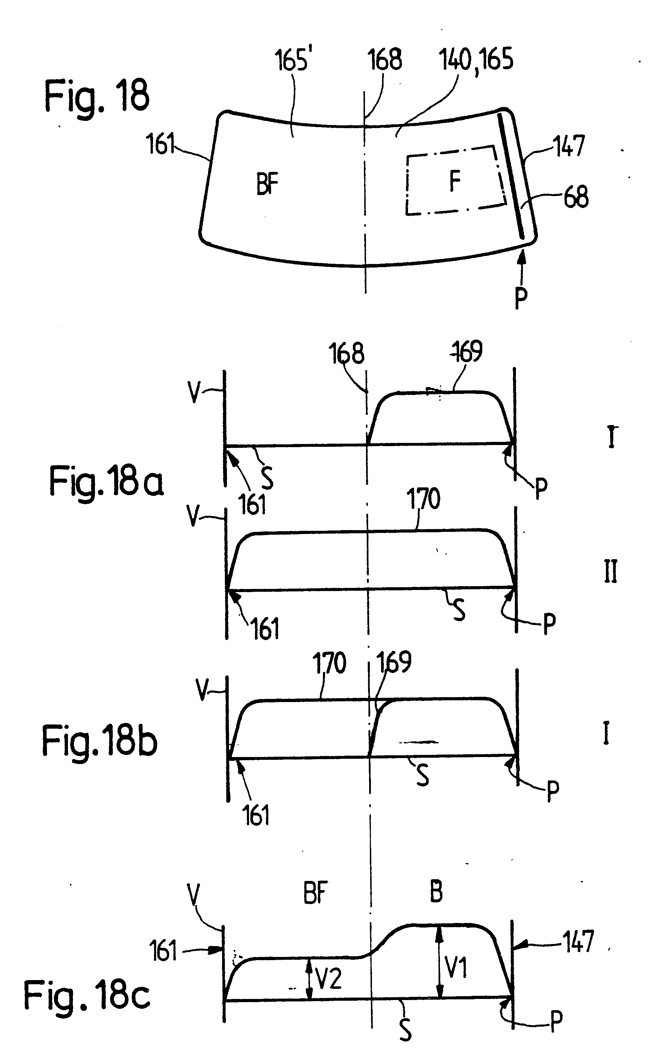

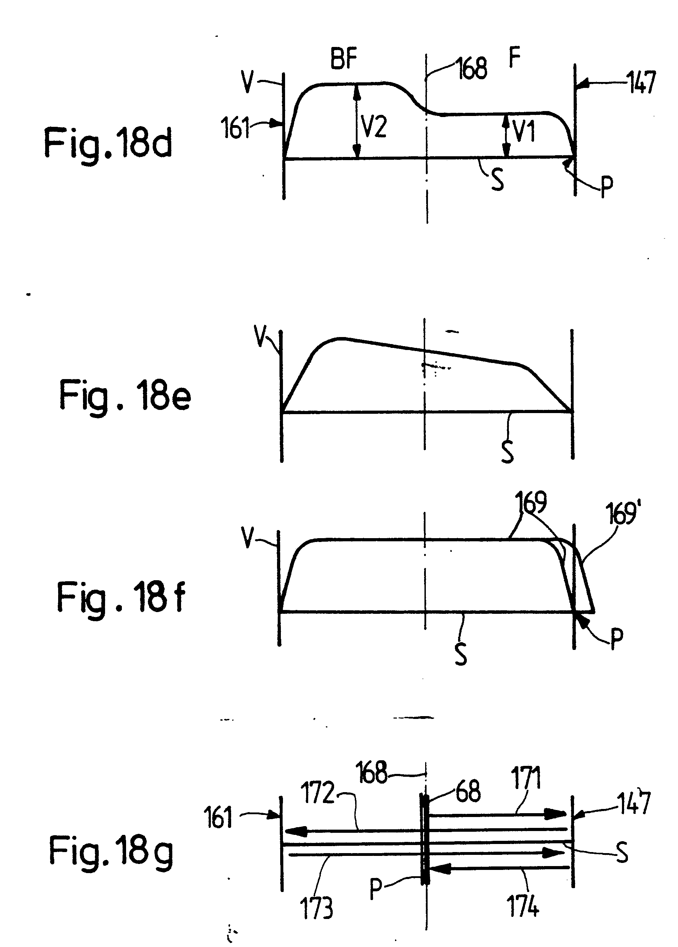

In Fig. 18 ff ist dargestellt, wie die in Fig. 14 dargestellte Scheibenreinigungsanlage speziell betrieben werden kann. Dabei ist in Fig. 18 die Anlage vereinfacht dargestellt. Darunter sind sechs Diagramme und eine Skizze gezeigt. Auf den Senkrechten der sechs Diagramme 18a - 18f ist dabei die Geschwindigkeit v und auf den Waagerechten der Weg s des Scheibenwischers 68 angegeben. Mit der Linie 168 ist die Mitte der Scheibe 140 gekennzeichnet. Die beiden der Fig. 18a zugehörigen Diagramme zeigen einen ersten, besonderen Linearantrieb. Hier ist vorgesehen, daß der Scheibenwischer 68 in der Betriebsstufe I von der im Bereich des seitlichen Scheibenrandes 147 liegenden Parkstellung P aus mit konstanter Geschwindigkeit v die Scheibe 140 (Fig. 18) bis zur Mittellinie 168 und wieder bis zum Scheibenrand 147 zurück, das heißt also, das SAE-Wischfeld 165 auf der Fahrerseite F, wischt. Dies ist in Fig. 18a mit der Kurve 169 angedeutet. Dadurch wird eine schnelle Reinigung dieses wichtigen Scheibenbereiches 165 ermöglicht.

In der zweiten Betriebsstufe II ist vorgesehen, daß der Scheibenwischer 68 von der im Bereich des seitlichen Scheibenrandes 147 liegenden Parkstellung P aus mit konstanter Geschwindigkeit v die Scheibe 140 (Fig. 18) bis zum anderen seitlichen Scheibenrand 161 und wieder bis zum Scheibenrand 147 zurück, das heißt also sowohl das Wischfeld 165 auf der Fahrerseite F als auch das Wischfeld 165′ auf der Beifahrerseite BF wischt. Dies ist in Fig. 18a mit der Kurve 170 angedeutet.

Bei der in Fig. 18b dargestellten Variante ist wiederum anhand eines Diagrammes ein zweiter, besonderer Linearantrieb gezeigt. Hier ist vorgesehen, daß der Scheibenwischer 68 in der Betriebsstufe I im Wechsel einmal von der im Bereich des einen Scheibenrandes 147 liegenden Parkstellung P aus mit konstanter Geschwindigkeit v die Scheibe 140 (Fig. 18) bis zur Mittellinie 168 und wieder bis zum Scheibenrand 147 zurück (Kurve 169) und anschließend von der im Bereich des Scheibenrandes 147 liegenden Parkstellung P aus mit konstanter Geschwindigkeit v die Scheibe 140 bis zum anderen Scheibenrand 161 und wieder bis zum Scheibenrand 147 zurück reinigt. Dadurch wird in nur einer Betriebsstufe eine schnelle Reinigung des wichtigen Scheibenbereiches 165 im Wechsel mit dem Scheibenbereich 165′ ermöglicht. Dabei wird das Wischfeld 165 auf der Fahrerseite F doppelt so oft gereinigt wie das Wischfeld 165′ auf der Beifahrerseite BF.

Bei der in den Diagrammen 18c und 18d dargestellten dritten und vierten Variante wird der Scheibenwischer 68 mit unterschiedlichen Geschwindigkeiten v1 und v2 zwischen den seitlichen Scheibenrändern 147 und 161 bewegt. Dabei wird er bei der Variante 18c auf der Fahrerseite F von der Parkstellung P aus bis zur Mittellinie 168 mit einer Geschwindigkeit v1 bewegt, die im Bereich der Mittellinie 168 ziemlich abrupt auf die Geschwindigkeit v2 gesenkt wird, mit der die Beifahrerseite BF bis zum Scheibenrand 161 gewischt wird. Somit wird hier die Fahrerseite F schnell und die Beifahrerseite BF langsamer gereinigt.

Bei der in Fig. 18d dargestellten Variante sind die Verhältnisse umgekehrt. Es wird zunächst von der Parkstellung P aus die Fahrerseite F bis zur Mittellinie 168 mit einer Geschwindigkeit v1 gewischt, die im Bereich der Mittellinie ziemlich abrupt auf die Geschwindigkeit v2 gesteigert wird, mit der die Beifahrerseite BF biz zum Scheibenrand 161 gewischt wird. Somit wird hier die Fahrerseite F langsam und die Beifahrerseite BF schneller gereinigt.

Das Diagramm 18e ähnelt Diagramm 18d bis auf die Tatsache, daß die Geschwindigkeit v nicht abrupt geändert wird, sondern linear.

In Diagramm 18f ist angedeutet, wie der Bewegungsablauf des Scheibenwischers aussieht, wenn im Parkstellungsbereich die Anpreßkraft des Scheibenwischers reduziert bzw. aufgehoben ist. Dabei ist mit 169' die Bewegungsablaufkurve bezeichnet, die der Scheibenwischer beim Verlassen der Parkstellung beschreibt und mit 169 die Bewegungsablaufkurve des Scheibenwischers während des üblichen Wischerbetriebs.

In der mit Fig. 18g bezeichneten Skizze ist ein dritter, besonderer Linearantrieb gezeigt. Hier ist die Parkstellung P des Scheibenwischers 68 im Bereich der Mittellinie 168 der Scheibe 140 (Fig. 18) vorgesehen. Von dort aus wird er zunächst bis zum seitlichen Scheibenrand 147 auf der Fahrerseite F (Pfeil 171), dann zum seitlichen Scheibenrand 161 auf der Beifahrerseite 161 (Pfeil 172), danach zum Scheibenrand 147 (Pfeil 173) und von dort zurück zur Scheibenmitte 168 (Pfeil 174) angetrieben. Das Wischfeld 165 auf der Fahrerseite F wird also auch hier wie bei Fig. 18b doppelt so oft gereinigt wie das Wischfeld 165' auf der Beifahrerseite BF.

Eine solche Wischeranlage könnte mit Vorteil bei Bussen oder Lastkraftwagen eingesetzt werden, die im Seitenbereich stark gekrümmte Scheiben besitzen, so daß bei einer Parkstellung der Scheibenwischer im Bereich eines seitlichen Scheibenrandes große Antriebskräfte ausgebracht werden müßten, um diese aus der Parkstellung bewegen zu können, was bei der vorgeschlagenen Parkstellung der Scheibenwischer im Bereich der Scheibenmitte nicht der Fall ist.

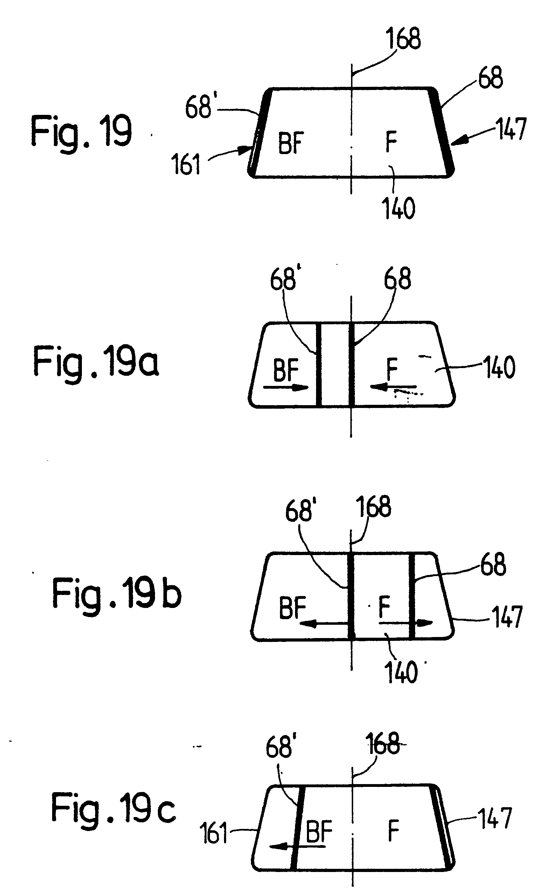

In Fig. 19 ff ist ein möglicher Bewegungsablauf bei einer Horizontal-Wischeranlage mit zwei Scheibenwischern 68 und 68' skizziert, wie sie beispielsweise in Fig. 16 oder 17 gezeigt ist. In Fig. 19 ist die Anlage vereinfacht dargestellt, und zwar mit den Scheibenwischern 68 und 68' in Parkposition.

Aus Fig. 19a ist ersichtlich, daß der zum Wischen der Fahrerseite F vorgesehene Scheibenwischer 68 schneller läuft als der zum Wischen der Beifahrerseite BF vorgesehene Scheibenwischer 68'. Ersterer hat hier die Mittellinie 168 der Scheibe 140 erreicht, letzterer noch nicht.

Aus Fig. 19b ist ersichtlich, daß sich der Scheibenwischer 68 bei der Rückbewegung von der Mittellinie 168 zum seitlichen Scheibenrand 147 auf der Fahrerseite F etwa in der Mitte des Scheibenbereichs auf der Fahrerseite F befindet, wenn der Scheibenwischer 68' die Mittellinie 168 der Scheibe 140 erreicht hat.

Fig. 19c zeigt, daß sich der Scheibenwischer 68' bei der Rückbewegung von der Mittellinie 168 zum seitlichen Scheibenrand 161 auf der Beifahrerseite BF etwa in der Mitte des Scheibenbereichs auf der Beifahrerseite BF befindet, wenn der Scheibenwischer 68 den seitlichen Scheibenrand 147 auf der Fahrerseite F erreicht hat.

Jeder der zuvor beschriebenen Bewegungsabläufe hat Vorteile. Die spezielle Bewegungsablaufwahl hängt von den individuellen Anforderungen an die Scheibenreinigungsanlage ab.

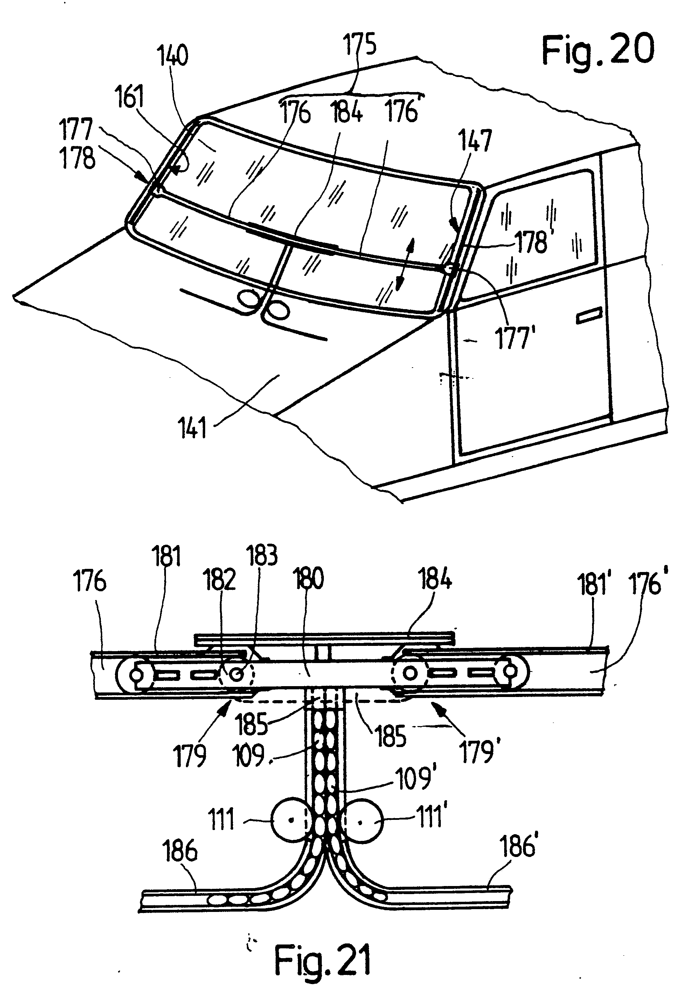

In Fig. 20 ist ein Kraftfahrzeug 141 mit einer Scheibenreinigungsanlage an der Windschutzscheibe 140 prinzipiell dargestellt, die als Linearwischeranlage mit einem vertikal über die Scheibe 140 bewegbaren Scheibenwischer 175 ausgebildet ist. Der Scheibenwischer 175 und sein Antrieb sind in Fig. 21 näher dargestellt. Der Scheibenwischer 175 setzt sich hier aus drei miteinander verbundenen, zusammenschiebbaren Teilen zusammen, nämlich zwei gleich ausgebildeten, in ihrer Längserstreckung bündig, aber auf Abstand hintereinander angeordneten Wischblättern 176 und 176', welche an ihrem äußeren Ende im Bereich der Scheibenseitenränder 147 und 161 über jeweils ein Führungsteil 177 bzw. 177' gleitend beweglich gegenüber einer am Fahrzeug befestigten Leiste 178 bzw. 178' geführt sind, und einem Zwischenstück 180 zusammen. An ihrem inneren Ende 179 bzw. 179', die etwa in der Mitte der Breitenerstreckung der Scheibe 140 liegen, sind die Wischblätter 176 und 176' durch das Zwischenstück 180 miteinander verbunden, welches in die Tragbügel 181 und 181' der Wischblätter 176 und 176' eingreift. Das Zwischenstück 180 ist beidseitig sowie an zwei weiteren Stellen seiner Längserstreckung, die jeweils etwa den dritten Teil der Längserstreckung von den Enden des Zwischenstücks 180 entfernt sind, mit jeweils einer Rolle 182 versehen, welche um eine die Scheibenwischerlängsachse senkrecht schneidende Achse 183 drehbar gelagert ist.

Dadurch kann sich die Wirkungslänge des Scheibenwischers problemlos durch Aufeinanderzurollen bzw. Voneinanderwegrollen der Wischbätter 176 und 176' der sich von oben nach unten vergrößernden Trapezform der Scheibe 140 anpassen. Dabei wird auch der zwischen den Wischblättern 176 und 176' liegende Zwischenraum immer gewischt, da am Zwischenstück ein Zusatzwischblatt 184 befestigt ist, das sich auch bei der weitest möglichen Entfernung der Wischblätter 176 und 176' voneinander bis über deren innere Enden 179 und 179' erstreckt. Dabei wird das Zusatzwischblatt 184 hier oberhalb der Wischblätter 176 und 176' vom Zwischenstück 180 gehalten. Es könnte aber ebensogut unterhalb gehalten sein. Insbesondere aus stilistischen Gründen ist noch am Zwischenstück 180 eine Abdeckung 185 gehalten, welche sich bis zu den dem Zusatzwischblatt 184 fernen Längsrändern der Wischblätter 176 und 176' erstreckt.

In einen sich quer zur Scheibenwischerlängsrichtung des Scheibenwischers 175 und nach unten in Richtung der Höhenerstreckung der Scheibe 140 weisenden Ansatz 185 des Zwischenstücks 180 greifen zwei Rohre 186 und 186' ein, die aus flexiblem Material bestehen. Jedes der Rohre 186 und 186' führt ein flexibles Antriebsmittel, das ein Zahnriemen oder dergleichen sein kann, hier aber wie das anhand der Fig. 11 beschriebene Antriebsmittel 109 aufgebaut ist. Die Antriebsmittel 109 und 109' sind innerhalb des Ansatzes 185 am Zwischenstück 180 befestigt. Angetrieben werden die Antriebsmittel 109 und 109' in ihrer Längsrichtung mittels jeweils eines Antriebsrades 111 bzw. 111'. das in jeweils einen nicht dargestellten Längsschlitz im Rohr 186 bzw. 186' eingreift und selbst motorisch antreibbar ist. Die Antriebsmittel 109 und 109' werden durch gegenläufigen Antrieb der Antriebsräder 111 und 111' in die gleiche Richtung bewegt. So bewegen sie und dadurch der ganze Scheibenwischer 175 sich nach oben, wenn sich das Antriebsrad 111' im Uhrzeigersinn und das Antriebsrad 111 im Gegenuhrzeigersinn dreht und nach unten, wenn die Drehrichtung der Antriebsräder 111 und 111' umgekehrt ist.

Es wäre auch möglich, den Scheibenwischer 175 mittels eines einzigen Antriebsmittels 109 bzw. Antriebes zu bewegen. Der beschriebene Doppelantrieb hat aber insbesndere den Vorteil, daß eine gegenseitige Abstützung und damit eine besonders gute Führung der flexiblen Antriebsmittel 109 und 109' gegeben ist.

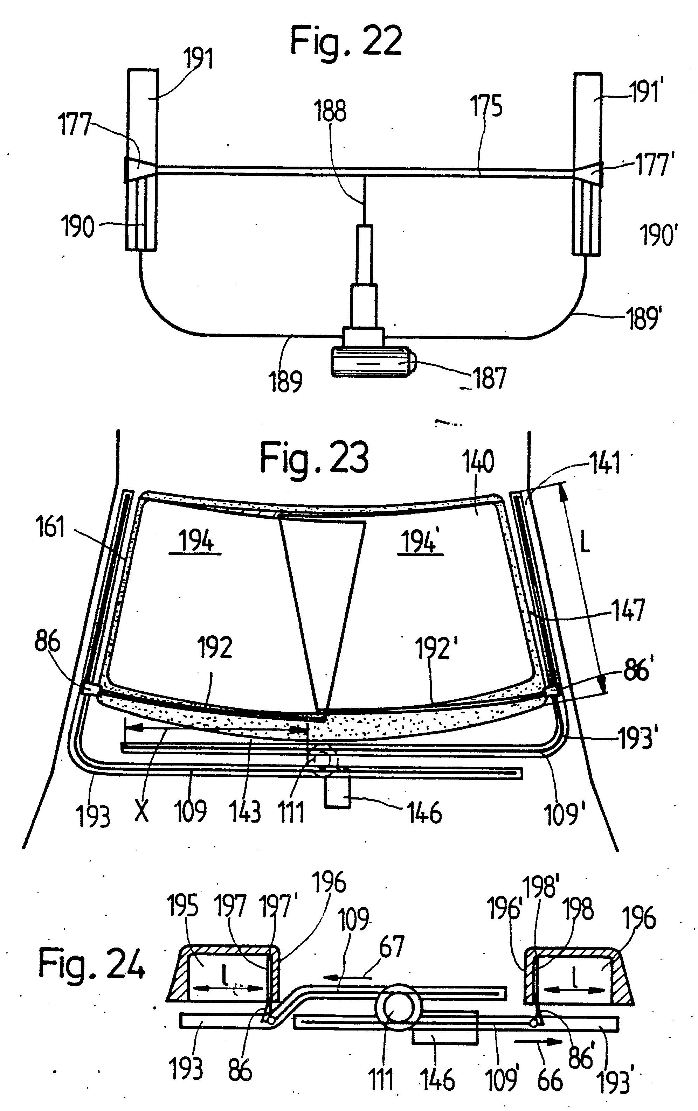

In Fig. 22 ist eine weitere mögliche Antriebsart für einen linear über eine Scheibe bewegbaren Scheibenwischer, der beispielsweise wie der Scheibenwischer 175 aufgebaut sein kann, prinzipiell dargestellt. Hier greift mittig zwischen den beiden äußeren Enden 177 und 177' des Scheibenwischers 175 ein drehrichtungsumkehrbarer Elektromotor 187 mit einer Kugelspindel 188 an. Weiterhin sind synchron mit der Kugelspindel 188 zwei biegsame Wellen 189 bzw. 189' antreibbar, die jeweils an einer Gewindespindel 190 bzw. 190' angreifen, die wiederum an einem Ende 177 bzw. 177' des Scheibenwischers 175 angreift und in einem Profil 191 bzw. 191' geführt ist. das ähnlich wie eines der zuvor beschriebenen Profile 78a und 78b ausgebildet ist.

Dieser über drei Stellen der Längserstreckung des Scheibenwischers 175 vorgenommene Dreifachantrieb ist besonders wirkungsvoll und sicher.

In Fig. 23 ist eine Scheibenwischeranlage dargestellt, die zwei im wesentlichen vertikal über die trapezförmige Windschutzscheibe 140 eines Kraftfahrzeugs 141 bewegbare Scheibenwischer 192 und 192' besitzt. Angetrieben werden die scheibenwischer 192 und 192' über zwei flexible, aber biegesteife Zug-Druck-Antriebsmittel 109 und 109', die in ein Antriebsrad 111, welches ringsum vertieft ist (vgl. Fig. 13), eingreifen, und zwar einander diametral gegenüberliegend. Das Antriebsrad 111 wird von einem drehrichtungsumkehrbaren Elektromotor 146 angetrieben, welcher unterhalb der Scheibe 140 etwa mittig deren Längserstreckung bzw. Breitenerstreckung des Fahrzeugs 141 angeordnet ist.

Die flexiblen Antriebsmittel 109 und 109' sind jeweils in einem etwa L-förmigen Gehäuse 193 bzw. 193' geführt, das sich entlang des unteren Scheibenrandes 143 und entlang eines seitlichen Scheibenrandes 161 bzw. 147 erstreckt. Die Scheibenwischer 192 und 192' greifen hier über nur jeweils einen Mitnehmer 86 bzw. 86' jeweils an einem Ende des Antriebsmittels 109 bzw. 109' an. Sie liegen in der Parkstellung im Bereich des unteren Scheibenrandes 143, und zwar derart, daß sie einander im Bereich ihrer freien Enden überlappen. Gegebenenfalls, insbesondere wenn die Scheibe 140 in der Praxis sehr groß ausgeführt wird, könnten sie hier zwecks verbesserter Führung gelenkig miteinander verbunden sein.

Wenn sich das Antriebsrad 111 im Uhrzeigersinn dreht, werden die Antriebsmittel 109 und 109' in die entlang der seitlichen Seitenränder 161 bzw. 147 verlaufenden, leerstehenden Abschnitte der Gehäuse 193 und 193' gedrückt, und zwar um einen Weg x, welcher etwa der Länge L des Seitenrandes 161 bzw. 147 entspricht und dadurch die Scheibenwischer 192 und 192' nach oben bewegt. Sie überstreichen dabei einander im Bereich der Scheibenmitte überlappende Wischfelder 194 und 194'. Die Länge der Antriebsmittel 109 und 109' hinter dem Antriebsrad 111 ist dabei derart gewählt, daß sie auch dann, wen die Scheibenwischer 192 und 192' ihre obere Position erreicht haben, noch mit dem Endbereich in dem Antriebsrad 111 liegen, also nicht aus diesem ausgefädelt sind. Nach der Drehrichtungsumkehr des Motors 146 werden die Antriebsmittel 109 und 109′ vom Antriebsrad 111 in die in Fig. 23 gezeigte Position gezogen.

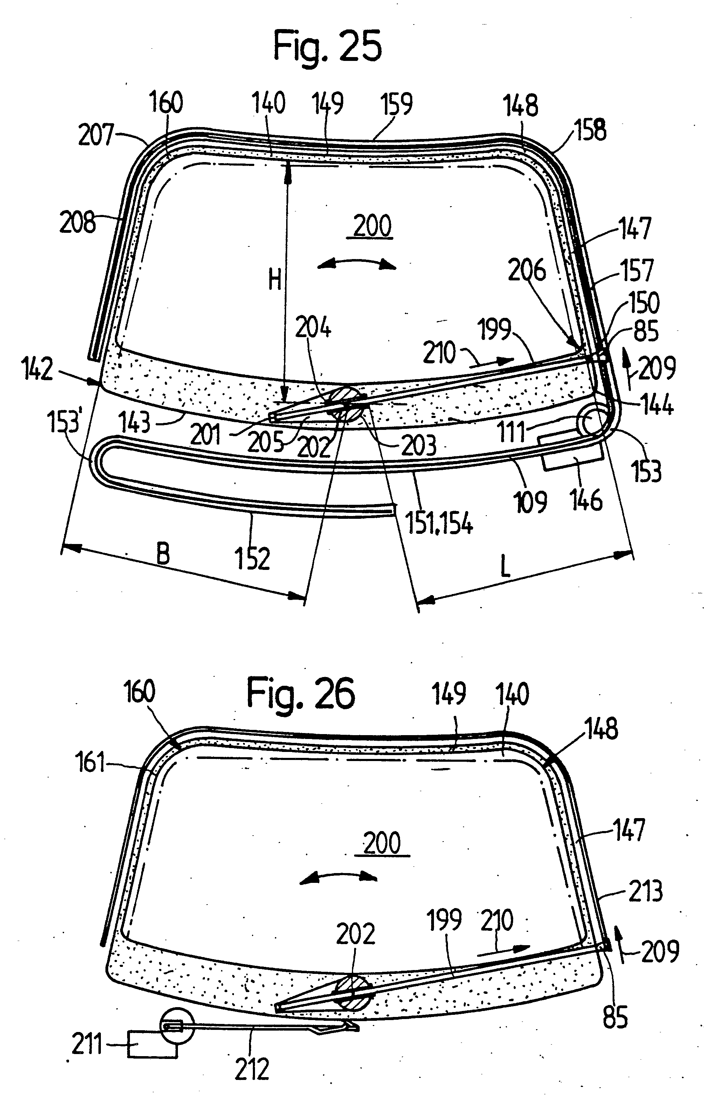

In Fig. 24 ist eine Scheibenwischeranlage dargestellt, welche prinzipiell den gleichen Antrieb wie die in Fig. 23 dargestellt besitzt. Gleiche Teile sind mit gleichen Bezugszeichen bezeichnet. Bezüglich ihrer Beschreibung wird auf die der Fig. 23 verwiesen. Die in Fig. 24 dargestellte Anlage besitzt aber zwei horizontal über die Länge 1 zweier gleich großer rechteckiger Kraftfahrzeug-Scheinwerferscheiben 195 und 196 bewegbare Scheibenwischer 197 und 198. In der Parkstellung liegen die Scheibenwischer 197 und 198 nahe der einander benachbarten Seitenränder 195′ bzw. 196′ der Scheiben 195 und 196. Der Motor 146 ist mittig zwischen den Scheinwerferscheiben 195 und 196 angeordnet. Die Gehäuse 193 und 193′ für die Antriebsmittel 109 und 109′ sind demgemäß zwischen den beiden Scheiben 195 und 196 und entlang von deren unteren Rändern verlegt. Dabei ist die Anordnung des Antriebsrades 111 so gewählt, daß eines der Gehäuse 193 und 193′, nämlich das Gehäuse 193′ vollständig gerade verläuft, was sich günstig auf dessen Herstellungskosten auswirkt.

Wenn sich das Antriebsrad 111 im Gegenuhrzeigersinn dreht, werden die Antriebsmittel 109 und 109′ gegenläufig in die Pfeilrichtungen 67 und 66 bewegt, und zwar um den Weg x, welcher etwa der Länge 1 der Scheibe 195 bzw. 196 entspricht. Nach der Drehrichtungsumkehr des Motors 146 werden die Antriebsmittel 109 und 109′ vom Antriebsmittel 111 in die in Fig. 24 gezeigte Position gezogen.

Wegen der geringen Größe der Scheiben 195 und 196 kann hier auf eine Führung der Scheibenwischer 197 und 198 an deren Enden 197′ bzw. 198′ verzichtet werden. Bei größeren, insbesondere bei höheren Scheiben empfiehlt sich aber dort eine Führung.

Die Scheiben können dabei auch unterschiedlich groß sein. Wenn sie unterschiedlich hoch sind, kann der für die höhere Scheibe vorgesehene Scheibenwischer länger als der andere ausgeführt werden, so daß auch dann eine vollständige Reinigung beider Scheiben gewährleistet ist.

Die Fig. 25 zeigt eine Scheibenwischeranlage mit einem einzigen Scheibenwischer 199, der auf einer Scheibe 140, die wiederum wie beispielsweise die in Fig. 14 gezeigte, trapezförmig ist, ein im wesentlichen halbkreisförmiges Wischfeld 200 säubern kann. Der Scheibenwischer 199 ist nahe seines einen, ersten Endes 201 um eine sich senkrecht zu seiner Längserstreckung verlaufende Achse 202 drehbar gelagert, auf welcher ein Führungsrad 203 sitzt, welches einen diametral durchgehenden Kanal 204 zur Führung des Scheibenwischers 199 in dessen Längsrichtung besitzt. Der kürzere, hinter dem Führungsrad 203 liegende Bereich des Scheibenwischers 199 verläuft unterhalb eines Führungshalters 205, der die Achse 202 an der Scheibe 140 hält. Dabei wird die Achse 202 in einer derartigen Position gehalten, daß ihr Abstand H zum oberen Scheibenrand 149 kleiner ist als die maximale halbe Breite B der Scheibe 140. An seinem anderen, zweiten Ende 206 greift der Scheibenwischer 199 über einen Mitnehmer 85 nahe eines Endes 150 eines flexiblen, ber biegesteifen Zug-Druck-Antriebsmittels 109 an, welches sich hier, wie zuvor beschrieben, aus einem Seil einer Vielzahl von im wesentlichen kugelförmigen Gliedern zusammensetzt, die lose auf dem Seil aufgereiht sind.

Das Antriebsmittel 109 ist in einem Führungskanal bzw. Gehäuse 151 etwa U-förmig verlegt. Dabei erstreckt sich das Gehäuse 151 mit einem geraden Abschnitt 152, der etwa mittig der Breitenerstreckung der Scheibe 140 und unterhalb dieser beginnt, parallel zum unteren Scheibenrand 143 bis in den Bereich der linken Scheibenecke 142, dann mit einem gekrümmten Abschnitt 153′ im Uhrzeigersinn nach oben, anschließend mit einem geraden Abschnitt 154 oberhalb und parallel des Abschnitts 152 zur rechten unteren Scheibenecke 144, wo sich ein drehrichtungsumkehrbarer (umpolbarer) Elektromotor 146 mit einem Antriebsrad 111 befindet, das das Gehäuse 151 im Gegenuhrzeigersinn über einen Winkel von etwa 90 Grad mit einem gekrümmten Abschnitt 153 umgibt, und zwar bis zum vertieften Bereich des Antriebsrades 111 (vgl. Fig. 13). Danach erstreckt sich das Gehäuse 151 mit einem geraden Abschnitt 157 entlang des rechten seitlichen Scheibenrandes 147, anschließend mit einem gekrümmten Abschnitt 158 im Gegenuhrzeigersinn um die rechte obere Scheibenecke 148, mit einem geraden Abschnitt 159 parallel zum oberen Scheibenrand 149 bis in den Bereich der linken oberen Scheibenecke 160, anschließend mit einem gekrümmten Abschnitt 207 im Gegenuhrzeigersinn um diese und letztendlich mit einem geraden Abschnitt 208 bis nahe zur linken unteren Scheibenecke 142.

Der Scheibenwischer 199 befindet sich in der Parkstellung nach rechts geneigt nahe der rechten unteren Scheibenecke 144 und das Antriebsmittel 109 reicht bis zum Ende des Abschnitts 152 des Gehäuses 151 (vgl. Fig. 25). Wenn sich das Antriebsrad 111 im Gegenuhrzeigersinn dreht, wird das Ende 150 des Antriebsmittels 109 im Gegenuhrzeigersinn in Pfeilrichtung 209 um die Scheibe 140 bis zum unteren Endes des Gehäuseabschnitts 208 bewegt. Dabei wird das Führungsrad 203 für das Ende 201 des Scheibenwischers 199 von diesem im Gegenuhrzeigersinn mitgedreht. Aufgrund der Befestigung des anderen Scheibenwischerendes 206 am Antriebsmittel 109 und dessen zuvor beschriebener Führung um die Scheibe 140 wird dabei die Wirkungslänge L des Scheibenwischers 199 während dessen Drehung mit der Achse 202 aufgrund einer Diametralverschiebung auf dieser Achse 202 in Pfeilrichtung 210 während der Bewegung von der Parkstellung bis zur rechten oberen Scheibenecke 148 größer, anschließend, weil der Abstand H der Achse 202 von der oberen Scheibenkante 149 kleiner als die maximale halbe Breite B der Scheibe 140 ist, durch eine entgegengesetzte Diametralverschiebung auf der Achse 202 kleiner, im Bereich der linken oberen Scheibenecke 152 größer und bis zur linken unteren Scheibenecke 142 kleiner. Nach Umpolung des Elektromotors 146 läuft der Scheibenwischer 199 auf die zuvor beschriebene Art in die Parkstellung zurück. Das Wischfeld 200 ist somit im Bereich der oberen Scheibenecken 148 und 152 größer als ein streng kreissegmentförmiges Wischfeld.

Die beschriebene Scheibenwischeranage arbeitet somit wie eine sogenannte hubgesteuerte Einarmwischanlage.

Die in Fig. 26 dargestellte Scheibenwischeranlage gleicht sehr der in Fig. 25 dargestellten. Demgemäß sind gleiche Teile nicht bzw. mit gleichen Bezugszeichen bezeichnet und werden an dieser Stelle nicht beschrieben. Im Gegensatz zu der Scheibenwischeranlage nach Fig. 25 besitzt die nach Fig. 26 aber einen Rundläufermotor 211, der über einen Gelenkstangenantrieb mit Kreuzlenker 212 an der Achse 202 angreift, die hier die Scheibe 140 durchdringt. Außerdem ist der Scheibenwischer 199 hier über den Mitnehmer 85 entlang einer feststehenden Schiene 213 verschiebbar geführt, welche die Scheibe 140 im wesentlichen U-förmig entlang der seitlichen Scheibenränder 147 und 161 und des oberen Randes 149 umgibt. Selbstverständlich könnte die Schiene 213 zwecks Witterungsschutz von einem Gehäuse umgeben sein, das gegebenenfalls auch von Karosserieteilen gebildet sein kann.

Auch mit dieser Scheibenwischeranlage ist ein bis in die oberen Scheibenecken 148 und 160 reichendes Wischfeld 200 säuberbar.

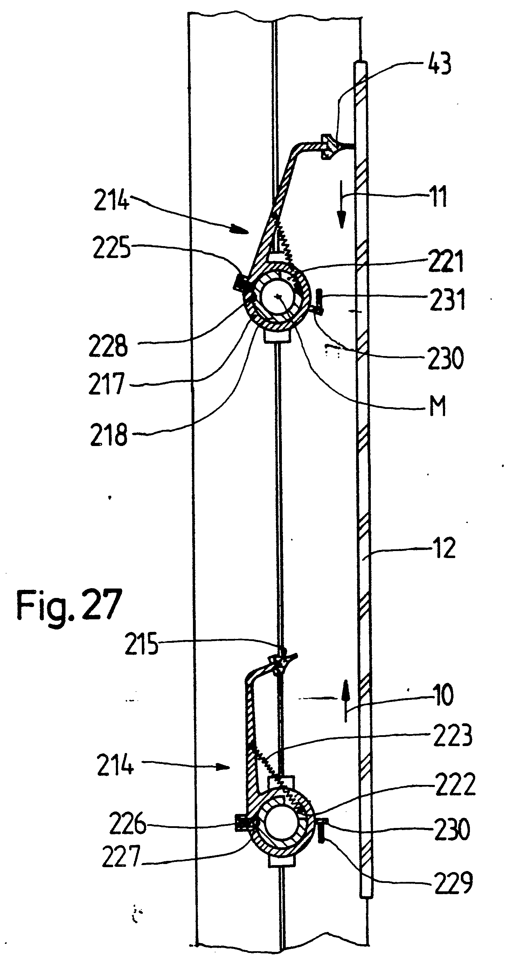

In Fig. 27 ist ein Scheibenwischer 214 in zwei verschiedenen Positionen auf einer Scheibe 12 dargestellt, der einer Scheibenreinigungsanlage mit Absenk- und Abhebemechanik zugehört. Eine solche Scheibenreinigungsanlage ist beispielsweise in Fig. 1 dargestellt.

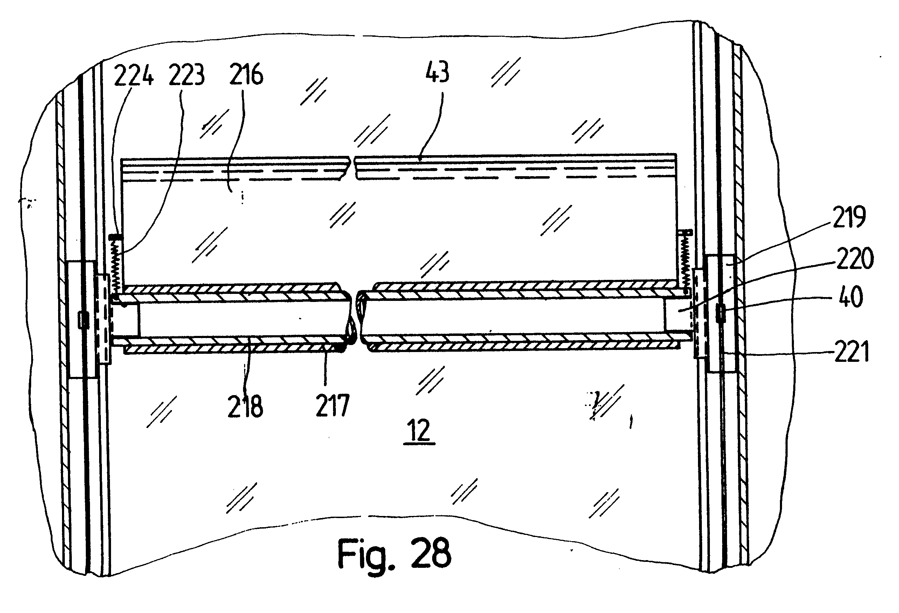

Der Scheibenwischer 214 besitzt, wie die Fig. 27 und 28 zeigen, eine Gummiwischleiste 43 zur Scheibenreinigung. Die Gummiwischleiste 43 ist hier an einer Längskante 215 eines blechförmigen Streifens 216 befestigt, welcher sich entlang der Längsausdehnung eines Rohres 217 erstreckt, mit welchem er einstückig gefertigt ist. In das Rohr 217 ist ein zweites Rohr 218 eingesetzt, das länger als das erste Rohr 217 ist und beidendig über das erste Rohr 217 und den Streifen 216 hinausragt. In das Rohr 218 greift beidendig jeweils ein zylindrisches Gleitstück 219 mit sich radial nach außen erstreckendem Fortsatz 220 ein, das von einem zylindrischen Nippel 40 fest umgriffen wird, der seinerseits an einem Seil bzw. Bowdenzug 221 befestigt ist.

Die beiden über das Rohr 217 überstehenden Bereiche des zweiten Rohres 218 sind an einem unterhalb des blechförmigen Streifens 216 liegenden Bereich mit jeweils einen einendig offenen Längsschlitz 221 versehen, welcher sich etwa über eine Viertelkreisausdehnung des Rohres 218 erstreckt. Im Bereich des Längsschlitzes 221 ist ein sich in Rohrlängsrichtung erstreckender Bolzen 222 gehalten, welcher mit einer Grundfläche mit dem den Längsschlitz 221 begrenzenden Grundflächenabschnitt des Rohres 218 verbunden ist (nicht dargestell). An diesem Bolzen 222 ist eine Zugfeder 223 eingehängt, die andererseits an einem Bolzen 224 eingehängt ist, welcher an dem Streifen 216 befestigt ist, über den er seitlich hinausteht, wie Fig. 28 zeigt. Die Zugfedern 223 erteilen somit dem Rohr 217 und damit der Gummiwischleiste 43 ein in Richtung der Scheibe 12 gerichtetes Drehmoment um die durch den gemeinsamen Mittelpunkt M der Rohre 217 und 218 gedachte geometrische Achse und sorgen für den Anpreßdruck der Gummiwischleiste 43 an der Scheibe 12. Der Scheibenwischer 214 ist somit in der Wirkung einem Wischhebel gleich, der einen Wischarm mit einem an einem Gelenkteil, das gegebenenfalls über eine Wischstange ein Wischblatt mit einer Gummiwischleiste trägt und über ein Gelenk schwenkbar an einem Befestigungsteil gelagert ist und bei dem wenigstens eine Zugfeder einerseits am Befestigungsteil und andererseits am Gelenkteil oder an der Wischstange angreift. Dem Befestigungsteil steht hier das innere Rohr 218 gleich und das äußere Rohr 217 dem Gelenkteil bzw. der Wischstange. Bei der Ausführungsform nach Fig. 27 und 28 ist dabei die Federkraft der Zugfedern 223 mit jeweils etwa 7 - 10 N gewählt, wodurch eine Anpreßkraft der Gummiwischleiste 43 von etwa 1,5 N erzielt wird. Dadurch ist eine sehr gute Scheibenreinigung gewährleistet.

Wie die Fig. 2 weiter zeigt, besitzt das äußere Rohr 217 einen radial nach außen gerichteten, kleinen rohrförmigen Fortsatz 225, welcher außen durch einen nicht dargestellten Stopfen verschlossen ist. In den Fortsatz 225 sind eine Schraubendruckfeder 226 und darüber eine Kugel 227 eingesetzt. Während des Wischbetriebes wird die Kugel 227 mittels des Stopfens über die Feder 226 gegen die Außenmantelfläche des inneren Rohres 218 gedrückt.

Der rohrförmige Fortsatz 225 könnte auch außen durch Eigenmaterial geschlossen sein. Auf diese Weise könnte mit absoluter Sicherheit ein unerwünschter Verlust der Feder 226 und der Kugel 227 vermieden und eine noch bessere Stilistik des Scheibenwischers 214 erreicht werden. Dann müssen aber selbstverständlich die Feder 226 und die Kugel 227 vor der Montage des inneren Rohres 218 in das äußere Rohr 217 montiert werden.

In der Parkstellung und während der Aufwärtsbewegung 10 des Scheibenwischers 214 wird die Kugel 227 von der Feder 226 in eine in die Außenmantelfläche des inneren Rohres 218 eingelassene, kalottenförmige Vertiefung 228 gedrückt, welche an einer hinter dieser Rastung 225 - 227 liegenden Stelle des inneren Rohres 218 vorgesehen ist. Die Gummiwischleiste 43 ist dann von der Scheibe 12 abgehoben. Die Verrastung wird dabei von einer im Bereich des unteren Scheibenrandes vorgesehehen, sich entlang dieser erstreckenden Leiste 229 bewirkt, welche mit einem am äußeren Rohr 217 an einer dem Fortsatz 225 diametral gegenüberliegenden Stelle angeformten, sich radial nach außen und über die gesamte Länge des äußeren Rohres 217 erstreckenden Lappen 230 zusammenwirkt.

Im Bereich des oberen Scheibenrandes ist ebenfalls eine Leiste 231 vorgesehen. Wenn der Scheibenwischer 214 mit dem Lappen 230 die Leiste 231 erreicht hat, wird die Kugel 227 aus der Vertiefung 228 weiter ins Innere des Fortsatzes 225 gedrückt; eine der Gummiwischleiste 43 näher als die Vertiefung 228 liegende, ebene Stelle der Außenmantelfläche des inneren Rohres 218 sichert die Lage der Kugel 227 und der Feder 226 im Fortsatz 225. Die beiden Rohre 217 und 218 sind somit voneinander entrastet, wodurch die Wirkung des zuvor beschriebenen Anpreßdruck- bzw. Anpreßkraftmechanismus sichergestellt ist.

Die Leiste 229 und der Lappen 230 stellen somit die Abhebemechanik und die Leiste 231 und der Lappen 230 die Absenkmechanik der Scheibenreinigungsanlage dar.

Eine andere Möglichkeit wäre, als Absenkmechanik eine oberhalb des Scheibenreinigers bzw. -wischers 214 angeordnete Leiste oder dergleichen zu verwenden, die auf den Scheibenreiniger einen von oben auf den Streifen 216 oder dergleichen gerichtete Kraft ausübt.

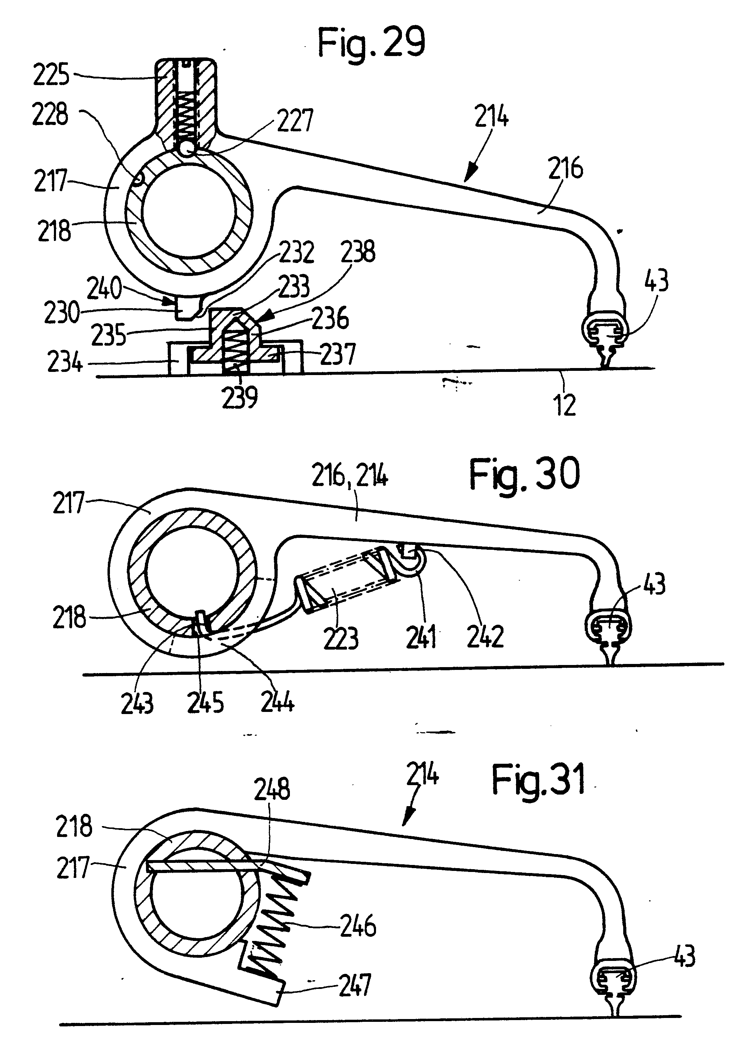

In den Fig. 29 bis 32 sind Scheibenwischer dargestellte, welche dem zuvor beschriebenen im wesentlichen gleichen. Gleiche Teile sind mit gleichen Bezugzeichen in Fig. 27 und 28 versehen, auf deren Beschreibung verwiesen wird.

Bei der Ausführungsform nach Fig. 29 ist der Lappen 230 an seiner der Gummiwischleiste 43 nahen Kante 232 abgeschrägt. Anstelle der glatten Leisten nach Fig. 27 ist hier jeweils eine im Querschnitt etwa U-förmige Leiste 239 vorgesehen, welche in einen an der Scheibe 12 befestigten Rahmen 234 eingreift, den sie mit von den Enden ihrer U-Schenkel 235 und 236 auswärts gebogenen Fortsätzen 237 untergreift. Dabei verläuft der U-Schenkel 235, welcher der schrägen Kante 232 des Lappens 230 unmittelbar gegenüberliegt, senkrecht nach unten, während der andere U-Schenkel 237 oben bei 238 abgeschrägt ist. In die Leiste 233 greifen mehrere nebeneinander angeordnete Druckfedern ein, von denen eine, die mit dem Bezugszeichen 239 bezeichnet ist, dargestellt ist, und die sich andererseits an der Scheibe 12 abstützen. Die Leiste 233 ist demgemäß federnd an der Scheibe 12 gelagert. Dadurch ergeben sich weichere Rastvorgänge als bei der zuvor beschriebenen Ausführungsform.

Wenn die Leiste 233 als Abhebeleiste 229 (vgl. Fig. 27) verwendet wird, läuft der Scheibenwischer 214 mit der Schräge 232 gegen den senkrechten Schenkel 235 und wird demgemäß weitgehend ruckfrei im Gegenuhrzeigersinn gedreht. Wenn die Kugel 227 dann in der Vertiefung 228 liegt, verläuft die Senkrechte 240 des Lappens 230 etwa parallel zur Schräge 238 der Leiste 233.

Bei einer Verwendung der Leiste 233 als Absenkleiste 230 (vgl. Fig. 27) sorgt die Schräge 238 für einen weichen Rastvorgang.

Der in Fig. 30 dargestellte Scheibenwischer 214 besitzt wenigstens eine als Schraubenfeder ausgebildete Zugfeder 223, welcher einerseits mit einem runden Haken 241 an einem nach unten gerichteten Bügel 242 des blechförmigen Streifens 216 eingehängt ist und andererseits mit einem rechteckigen Haken 243 erst durch einen Durchbruch 244 im äußeren Rohr 217 und dann in einen kleineren, geringfügig breiter als der Haken 243 ausgebildeten Durchbruch 245 im inneren Rohr 218 eingreift. Die Zugfeder 223 liegt somit geschützt ganz unter dem Streifen 216 und bereichsweise in den Rohren 217 und 218, was für ihre ständig einwandfreie Wirkung und für die Stilistik des Scheibenwischers vorteilhaft ist. Die Rohre 217 und 218 können hier gleich lang ausgebildet sein.

Der Scheibenwischer 214 nach Fig. 31 besitzt anstelle wenigstens einer Zugfeder wenigstens eine Druckfeder, un zwar wenigstens eine Schraubendruckfeder 246. Diese stützt sich einerseits an einem äußeren Rohr 217, das hier in Richtung der Gummiwischleiste 43 offen und somit im Querschnitt etwa C-förmig ist, angeformten, schräg nach unten und zur Gummiwischleiste 43 hin erstreckenden Absatz 247 und andererseits an einem in das innere Rohr 218 eingesteckten, nach außen ragenden Blech 248 ab. Wenn der Scheibenwischer 214 mit dem Ansatz 247 gegen eine Leiste 229 (Fig. 28) oder dergleichen läuft, wird das äußere Rohr 217 nach oben gedrückt, die Feder 246 zusammengedrückt und die Wischleiste 43 von der Scheibe abgehoben. Dieser Scheibenwischer 214 besitzt somit auch eine geschützte Feder und eine gute Stilistik.

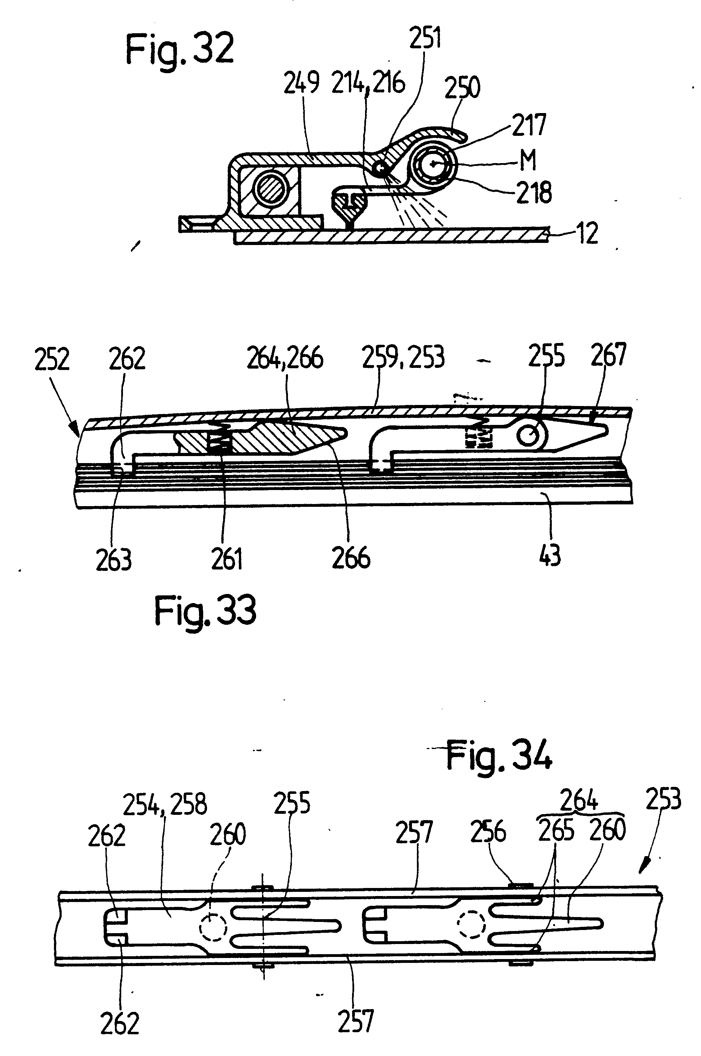

In Fig. 32 ist ein Scheibenwischer 214 dargestellt, bei welchem der blechförmige Streifen 216 anstelle oberhalb des Mittelpunkts M der Rohre 217 und 218 unterhalb des Mittelpunkts M verläuft. Im Bereich eines Randes der Scheibe 12, bei Vertikalwischeranlagen vorzugsweise im Bereich des oberen Randes der Scheibe 12, ist ein Schutzblech 249 vorgesehen, daß maßlich und in der Gestalt dem Scheibenwischer 214 angepaßt ist. Es überdeckt die Rohre 217 und 218 mit einer gekrümmten Haube 250. Weiterhin besitzt es ein Wasser-und/oder Waschflüssigkeitsrohr 251, durch welches bei Bedarf der Scheibe Waschflüssigkeit vorzugsweise durch nicht dargestellte Durchbrüche im Streifen 216 zugeführt werden kann. Dadurch werden eine gute Scheibenreinigung und ein guter Schutz des Scheibenwischers 214 in der Parkstellung bei guter Stilistik der Anlage gewährleistet. Vorzugsweise soll auch eine der Wendestellungen des Scheibenwischers 214 unter dem Schutzblech 249 liegen, um zu vermeiden, daß ein Wasserrand im Wendestellungsbereich sichtbar ist.

In den Fig. 33 und 34 ist ein Wischblatt 252 dargestellt, das einen im Querschnitt etwa U-förmigen Tragbügel 253 besitzt, welcher eine Gummiwischleiste 43 über die ganze Länge übergreift. In dem Tragbügel 253 sind eine Vielzahl von zweiarmigen Hebeln 254 un jeweils eine Achse 255 drehbar gelagert, welche sich quer zur Wischblattlängsrichtung erstreckt. Die Achsen 255 sind durch zwei bolzenartige Ansätze 256 realisiert, die beidseitig an den Hebeln 254 angeformt sind und sich durch die Seitenwangen 257 des Tragbügels 253 erstrecken. Der eine erste Arm 258 jedes Hebels 254 ist im wesentlichen quaderförmig und nahe der Achse 255 mit einem zum Steg 259 des Tragbügels hin offenen Sackloch 260 versehen, in das eine als Schraubenfeder ausgebildete Druckfeder 261 eingreift, die sich andererseits an der Innenseite des Steges 259 des Tragbügels 253 abstützt. An seinem der Achse 255 fernen Ende ist der Arm 258 beidseitig mit jeweils einem nach unten weisenden Fortsatz 262 versehen, der in eine seitlich offene Tasche 263 in der Gummiwischleiste 43 eingreift. Die Hebel 254 haben somit hier die Funktion wie die sogenannten Krallenbügel herkömmlicher Wischblatt-Traggestelle. Der andere, zweite Arm 264 jedes Hebels 254 ist dabei dreizinkig ausgebildet, wobei die beiden äußeren Zinken 265 an den Innenseiten der Seitenwangen 257 des Tragbügels 253 anliegen. Die mittlere Zinke 266 ist länger als die äußeren Zinken 265 ausgebildet und im Längsschnitt etwa dreieckig. Die obere Seite 267 der Zinke 266 verläuft dabi, vom Tragbügelsteg 259 aus betrachtet, schräg nach unten. Die Zinke 266 wirkt somit als Anschlag.

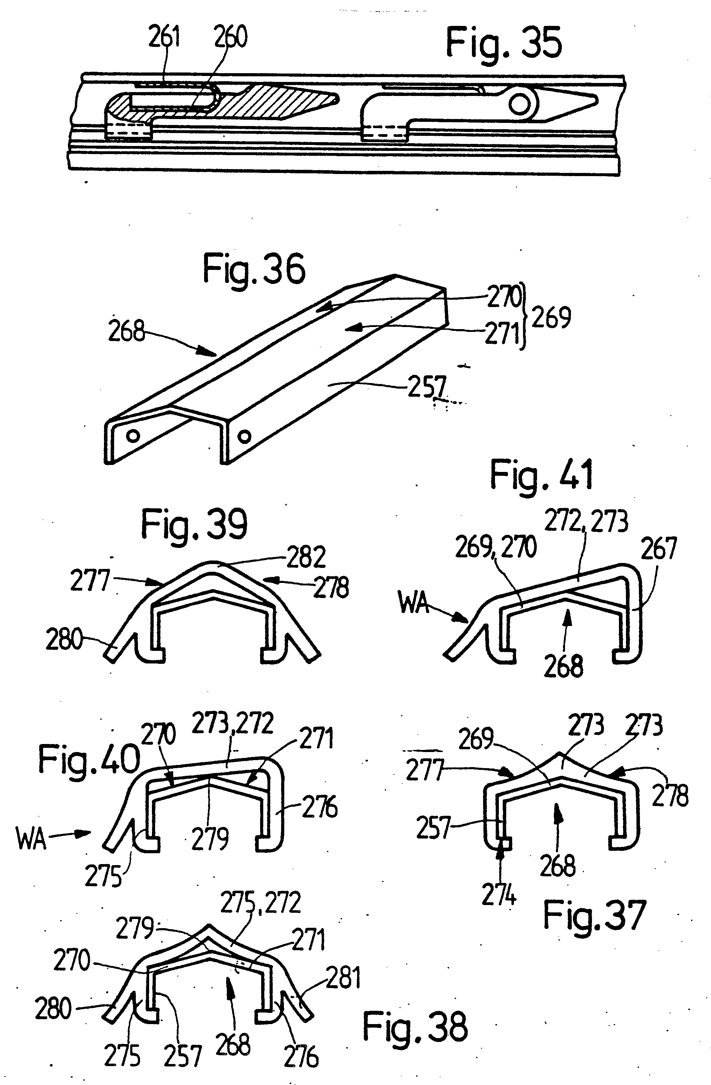

Bei der Ausführungsform nach Fig. 35 ist lediglich das Sackloch 260 länger ausgebildet und anstelle der Schraubenfeder eine als U-förmige Blattfeder ausgebildete Druckfeder 261 vorgesehen.

In beiden Fällen ist aufgrund der Verwendung einer Vielzahl federnd abgestützter Krallenbügel eine hervorragende Anpreßkraftverteilung in der Wischleiste 43 gewährleistet.

In Fig. 36 ist ein Tragbügel 268 dargestellt, welcher anstelle eines streng U-förmige Tragbügels beispielsweise bei dem Wischblatt nach Fig. 33 oder 35 verwendet werden kann. Der Steg 269 des Tragbügels 268 besitzt hier zwei geneigte Flächen 270 und 271, so daß der Steg 269 wie ein nach unten offenes V aussieht. An die Enden der Flächen 270 und 271 schließen sich senkrecht nach unten weisende Seitenwangen 257 an. Aufgrund der V-Form des Steges 269 wird ein gutes aerodynamisches Verhalten des Wischblatts erreicht.

In den Fig. 37 bis 41 ist dargestellt, wie der Tragbügel 268 nach Fig. 36 für spezielle aerodynamische Verhältnisse speziell ausgerüstet werden kann. In allen Fällen wird eine auf den Tragbügel 268 aufklipsbare Kunststoffkappe 272 verwendet, welche dessen Steg 269 mit einem Bereich 273 ganz und die Seitenwangen 257 bis zu deren Endkanten 274 mit Seitenwänden 275 und 276 überdeckt.

Bei der Ausführungsform nach Fig. 37 liegt dabei die Kunstoffkappe 272 mit dem Bereich 273 überall eng am Steg 269 an, der spitzwinkliger als der Steg 269 nach Fig. 36 ist und Außenflächen 277 und 278 besitzt, die schaufelartig nach innen zum Steg 269 hin gekrümmt sind.

Bei der Ausführungsform nach Fig. 38 liegt der Bereich 273 der Kunststoffkappe 272 an dem Angrenzungsbereich 279 der Stegflächen 270 und 271, von diesen entfernt und ist demgemäß schmaler, was Materialersparnis gegenüber der Ausführungsform nach Fig. 37 mit sich bringt. Außerdem hat die Kunststoffkappe 272 nach Fig. 38 an ihren Seitenwänden 275 und 276 jeweils einen nach außen hin abstehenden Fortsatz 280 bzw. 281 mit Windleitfunktion. Dadurch besitzt der gesamte Aufbau aus Tragbügel 268 und Kunststoffkappe 272 im Umriß eine etwa dreieckige Gestalt.

Bei der Ausführungsform nach Fig. 39 ist gegenüber der nach Fig. 38 lediglich der Angrenzungsbereich 282 der Außenflächen 277 und 278 nicht spitzwinklig, sondern abgerundet und die Außenflächen 277 und 278 sind eben. Die Ausführungsformen nach den Fig. 37 bis 39 eignen sich insbesondere für eine Windanströmung auf den Bereich 282. Die Flächen 277 und 278 ermöglichen dann eine gute Übertragung des Winddruckes auf beide Wischblattseiten.

Bei der Ausführungsform nach Fig. 40 ist der Bereich 273 der Kunststoffkappe 272 eben und verläuft von der Windanströmseite WA aus leicht geneigt und sich an dem Angrenzungsbereich 279 der Stegflächen 270 und 271 abstützend nach oben. Beide Seitenwände 275 und 276 sind demgemäß höher als bei den zuvor dargestellten Ausführungsformen. Die auf der Windanströmseite WA liegende Seitenwand 275 besitzt auch einen Fortsatz 280 mit Windleitfunktion.

Bei der Ausführungsform nach Fig. 41 ist der Bereich 273 der Kunststoffkappe 272 wiederum eben. Er liegt aber an der Stegfläche 270 des Tragbügelsteges 269 an, wodurch eine großflächige Übertragung es vom Wind abgeleiteten Drucks auf die Windanströmseite WA des Wischblatts möglich ist.

Abschließend sei noch darauf hingewiesen, daß die Wischblätter bzw. Tragbügel nach den Fig. 33 bis 41 bei jeder Art von Wischeranlagen, also sowohl mit Linearantrieb als auch mit Pendel- oder Rotationsantrieb des Wischblattes mit oder ohne beidendige Führung des Scheibenwischers mit Vorteil eingesezt werden können.


**Ansprüche**

1. Scheibenreinigungsanlage mit wenigstens einem auf einer Scheibe hin-und herbewegbaren, endseitig antreibbaren Scheibenreiniger, dadurch gekennzeichnet, daß der Scheibenreiniger (13, 68, 68', 175, 192, 192', 195, 196, 199, 214, 232, 252) beidendig geführt ist.

2. Scheibenreinigungsanlage nach Anspruch 1, dadurch gekennzeichnet, daß der Scheibenreiniger (13, 68, 68', 175, 196, 197, 198, 214, 232, 252) wenigstens annähernd bis in den Bereich zweier einander gegenüberliegender Scheibenränder (147, 161; 143, 149) reicht.

3. Scheibenreinigungsanlage nach Anspruch 1 oder 2, dadurch gekennzeichnet, daß der Scheibenreiniger (13, 68, 68', 175, 192, 192', 195, 196, 197, 198, 214, 232, 252) wenigstens annährend linear antreibbar ist.

4. Scheibenreinigungsanlage, insbesondere nach einem der vorhergehenden Ansprüche, dadurch gekennzeichnet, daß der Scheibenreiniger (68, 68') ungleich linear antreibbar ist.

5. Scheibenreinigungsanlage nach Anspruch 3 oder 4, dadurch gekennzeichnet, daß wenigstens zwei Scheibenreiniger (68, 68') vorhanden sind, welche in der Parkstellung (P) oder Scheibenreinigungsanlage in seitlichen Abstand nebeneinander verlaufen.

6. Scheibenreinigungsanlage nach einem der vorhergehenden Ansprüche, dadurch gekennzeichnet, daß der Scheibenreiniger (13; 68, 68') an beiden Enden (61, 63; 85, 86, 85', 86') mittels gegenläufig antreibbarer Antriebsmittel (14, 14'; 71a, 71b; 109, 109') antreibbar ist.

7. Scheibenreinigungsanlage insbesondere nach Anspruch 4 oder nach Anspruch 4 und 6, dadurch gekennzeichnet, daß sie zum Antrieb mehrerer Scheibenreiniger (68, 68') eine deren Anzahl entsprechende Anzahl von synchronisierbaren Motoren, insbesondere von Elektromotoren (146; 166) mit synchronisierbaren Abtriebswellen, aufweist, von denen jeweils einer einem Scheibenreiniger (68, 68') zugeordnet ist.

8. Scheibenreinigungsanlage nach einem der Ansprüche 4 bis 7, dadurch gekennzeichnet, daß (einer) der Scheibenreiniger (68) in einer bzw. mehreren Betriebstufen (I, II ) mit unterschiedlicher Geschwindigkeit antreibbar ist.

9. Scheibenreinigungsanlage nach einem der Ansprüche 4 bis 7, dadurch gekennzeichnet, daß der/die Scheibenreiniger (68) in unterschiedlichen/gleichen Betriebstufen (I, II) unterschiedlich weit antreibbar ist/sind.

10. Scheibenreinigungsanlage nach einem der Ansprüche 4 bis 9, dadurch gekennzeichnet, daß das/die Antriebsmittel (109, 109') mittels zweier Antriebsräder (111, 111') antreibbar ist/sind, welche unterschiedlich große Durchmesser aufweisen.

11. Scheibenreinigungsanlage nach einem der Ansprüche 4 bis 9, dadurch gekennzeichnet, daß mehrere Antriebsmittel (109, 109') durch einer ihrer Anzahl entsprechende Anzahl von Antriebsrädern (162) gleich großen Durchmessers und ein Vorgelege (163) antreibbar sind.

12. Scheibenreinigungsanlage nach einen der Ansprüche 5 bis 11, dadurch gekennzeichnet, daß die Parkstellung der (des) Scheibenreiniger(s) (68) im Bereich der Scheibenmitte (168) vorgesehen ist.

13. Scheibenreinigungsanlage nach einen der Ansprüche 5 bis 9, dadurch gekennzeichnet, daß beide Scheibenreiniger (68, 68') ihre Parkstellung im Bereich des gleichen Scheibenrandes (147) besitzen.

14. Scheibenreinigungsanlage nach wenigstens einem der vorhergehenden Ansprüche, dadurch gekennzeichnet, daß das Antriebsmittel (14, 14') ein endloses Bauteil ist.

15. Scheibenreinigungsanlage nach Anspruch 14, dadurch gekennzeichnet, daß der Scheibenreiniger (13) beidendig mit dem gleichen Antriebsmittel (14) wirkverbunden ist.

16. Scheibenreinigungsanlage nach Anspruch 14, dadurch gekennzeichnet, daß der Scheibenreiniger (13) an seinem ersten Ende (63) mit einem ersten Antriebsmittel (14) und an seinem zweiten Ende (61) mit einem zweiten Antriebsmittel (14′) wirkverbunden ist.

17. Scheibenreinigungsanlage nach Anspruch 2, dadurch gekennzeichnet, daß der Scheibenreiniger (68, 175) an seinem ersten Ende (85, 177) mit einem ersten Antriebsmittel (71a; 109; 189) und an seinem zweiten Ende (86, 177′) mit einem zweiten Antriebsmittel (71b; 109′; 189′) wirkverbunden ist.

18. Scheibenreinigungsanlage, insbesondere nach Anspruch 3, dadurch gekennzeichnet, daß ein erster Scheibenreiniger (192; 197) mit einem ersten Antriebsmittel (109) und ein zweiter Scheibenreiniger (192′, 198) mit einem zweiten Antriebsmittel (109′) wirkverbunden ist und daß die Antriebsmittel (109, 109′) vom gleichen Motor (146) antreibbar sind.

19. Scheibenreinigungsanlage nach Anspruch 1, dadurch gekennzeichnet, daß der Scheibenreiniger (199) zur Erzeugung eines im wesentlichen kreissegmentförmigen Reinigungsfeldes (200) nahe oder an seinem ersten Ende (201) um eine wenigstens annähernd senkrecht zu seiner Längserstreckung verlaufende Achse (202) drehbar gelagert und in seiner Längsrichtung beweglich geführt und an seinem zweiten Ende (206) mit einem wenigstens annähernd linear antreibbaren Antriebsmittel (109) oder mit einer Schiene (213) wirkverbunden ist.

20. Scheibenreinigungsanlage nach Anspruch 16, 17, 18 oder 19, dadurch gekennzeichnet, daß das/die Antriebsmittel (71a, 71b; 109, 109′) ein Zug-Druckelement(e) ist/sind.

21. Scheibenreinigungsanlage nach Anspruch 16, 17, 18, 19 oder 20, dadurch gekennzeichnet, daß das/die Antriebsmittel (14, 14′; 71a, 71b; 109, 109′; 189, 189′) flexibel ist/sind.

22. Scheibenreinigungsanlage nach Anspruch 20 oder 21, dadurch gekennzeichnet, daß das Antriebsmittel (71a, 71b; 109, 109′) vorzugsweise formschlüssig mittels wenigstens eines Antriebsrades (99; 11) antreibbar ist.

23. Scheibenreinigungsanlage nach Anspruch 21 und 22, dadurch gekennzeichnet, daß das Antriebsmittel (71a, 71b) mittels wenigstens eines Andruckmittels (102, 103, 104, 105; 102′, 103′, 104′, 105′) dem Antriebsrad (99) zugeführt wird.

24. Scheibenreinigungsanlage nach Anspruch 21, dadurch gekennzeichnet, daß das Antriebsmittel (109, 109′) als Kette mit mehreren auf einem Seil (112) oder dergleichen aufgereihten Gliedern (113) ausgebildet ist, welche an zwei einander gegenüberliegenden Stellen jeweils einen profilierten Abschnitt (121) besitzen, welcher mittels in Richtung der Höhenerstreckung (h1) des Antriebsrades (111) verlaufenden profilierten Abschnitten (135) des Antriebsrades (111) antreibbar ist.

25. Scheibenreinigungsanlage nach Anspruch 21, dadurch gekennzeichnet, daß das Antriebsmittel (71a, 71b) als profiliertes Band, insbesondere als Lochband, ausgebildet ist.

26. Scheibenreinigungsanlage nach einem der Ansprüche 14 bis 25, dadurch gekennzeichnet, daß das/die Antriebsmittel (14; 71a, 71b; 109, 109′) U-förmig verlegt sind.

26. Scheibenreinigungsanlage nach einem der Ansprüche 14 bis 25, dadurch gekennzeichnet, daß das/die Antriebsmittel (14; 71a, 71b; 109, 109′) U-förmig verlegt sind.

27. Scheibenreinigungsanlage nach einem der vorhergehenden Ansprüche, dadurch gekennzeichnet, daß das/die Antriebsmittel (14; 71a, 71b; 109, 109′) von einem Gehäuse (15; 73; 110; 186, 186′; 151; 191, 191′; 193, 193′) umgeben ist/sind.

28. Scheibenreinigungsanlage nach Anspruch 21 und 27, dadurch gekennzeichnet, daß das Gehäuse (75; 151) länger als das/die Antriebsmittel (71a, 71b; 109, 109′) ist und daß das jeweils nicht unter Zuglast stehende Ende des Antriebsmittels (71a, 71b; 109, 109′) in einen ansonsten leeren Gehäuseabschnitt (106, 107; 152, 151′) ausweicht, welcher vorzugsweise im Bereich einer Scheibenrandes (143) verlegt ist.

29. Scheibenreinigungsanlage nach Anspruch 27, dadurch gekennzeichnet, daß das Gehäuse (75; 151) zwei sich entlang zweier einander gegenüberliegende Scheibenbereiche erstreckende Abschnitte (75a, 75b) besitzt, welche jeweils einen Längsschlitz (83) zum Durchtritt des Scheibenreinigers oder eines den Scheibenreiniger (68) führenden Mitnehmers (85, 86) aufweist und daß die beiden Längsschlitze (83) in die gleiche Richtung weisen.

30. Scheibenreinigungsanlage nach Anspruch 29, dadurch gekennzeichnet, daß die Längsschlitze (83) bei einer Vertikal-Scheibenreinigungsanlage nach unten weisen.

31. Scheibenreinigungsanlage, insbesondere nach einem der Ansprüche 26 bis 30, dadurch gekennzeichnet, daß das Gehäuse (15; 75) wenigstens einen Kanal (16; 89, 92, 94) zur Aufnahme einer Dichtung, zur Waschflüssigkeitsführung, zur Schmutz- und/oder Kondens- bzw. Regenwasserabsaugung, und/oder zur Führung von Energieleitungen aufweist.

32. Scheibenreinigungsanlage nach wenigstens einem der vorhergehenden Ansprüche, dadurch gekennzeichnet, daß sie eine Abhebevorrichtung (229,230;233) für den Scheibenreiniger (214) in der Parkstellung aufweist.

33. Scheibenreinigungsanlage nach wenigstens einem der vorhergehenden Ansprüche, dadurch gekennzeichnet, daß sie eine Abhebevorrichtung (229,230;233) für den Scheibenreiniger (214) aufweist, welche in einer ersten Bewegungsrichtung (10) wirkt und eine Absenkvorrichtung (230,231;233), welche in einer zweiten Bewegungsrichtung (11) wirkt.

34. Scheibenreinigungsanlage nach wenigstens einen der vorhergehenden Ansprüche, dadurch gekennzeichnet, daß sie ein Wischblatt (252) mit wenigstens mit einer elastischen Wischleiste (43) aufweist, oberhalb derer sich ein Tragbügel (253) wenigstens annähernd über ihre gesamte Länge erstreckt, an welchem in Längsrichtung hintereinander eine Vielzahl von Federn (261) angeordnet sind, welche die Wischleiste (43) gegen die Scheibe drücken.

35. Scheibenreinigungsanlage nach wenigstens einem der vorhergehenden Ansprüche, dadurch gekennzeichnet, daß sie als Scheibenreiniger wenigstens eine Bürste, insbesondere eine um ihre Längsachse rotierend antreibbare Rundbürste, aufweist.

36. Scheibenreinigungsanlage nach wenigstens einem der vorhergehenden Ansprüche, dadurch gekennzeichnet, daß in Scheibenreinigerlängsrichtung ein Toleranzausgleich zwischen Scheibenreiniger (68, 68'; 175; 199) und Führung (75; 151) möglich ist.

Fig. 1

Fig. 2

Fig. 3

EP 0 302 343 A1

Fig. 4

Fig. 5

Fig. 6

Fig. 7

Fig. 9

EP 0 302 343 A1

Fig. 8

Fig. 10

# Fig. 10 a

# Fig. 11

Fig. 12

Fig. 13

## Fig.14

## Fig.15

## Fig.16

## Fig.17

Fig. 18

Fig. 18a

Fig. 18b

Fig. 18c

Fig.18d

Fig. 18e

Fig. 18 f

Fig.18g

Fig. 19

Fig. 19 a

Fig. 19 b

Fig. 19 c

Fig.20

Fig.21

## Fig. 22

## Fig. 23

## Fig. 24

# Fig. 25

# Fig. 26

Fig. 27

Fig. 28

Fig. 29

Fig. 30

Fig. 31

**Fig. 32**

**Fig. 33**

**Fig. 34**

Fig. 35

Fig. 36

Fig. 39

Fig. 41

Fig. 40

Fig. 37

Fig. 38

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 257 138 (N. CLEMENTS et al.) <br> * Titelseite; Spalte 2, Zeilen 4-64; Figuren 1,2,4,6 * | 1-3 | A 47 L 1/02 <br> B 60 S 1/34 |
| A | | 5,13,15,22,26-28,35 | |
| | --- | | |
| X | DE-A-2 403 919 (SCHWARZ GEB. JOHN, E.) <br> * Seite 4; Figuren 1-3 * | 1-3 | |
| A | | 5,13,15,22,27 | |
| | --- | | |
| X | US-A-3 354 494 (R.L. RISCHMAN) <br> * Spalte 2, Zeilen 26-71; Spalte 3, Zeilen 3-52 * | 1-3 | |
| A | | 14,15,21,24,25 | |
| | --- | | |
| X | FR-A-2 230 193 (CIEBIE PROJECTEURS) <br> * Seiten 2,3; Figur * | 1,2 | RECHERCHIERTE SACHGEBIETE (Int. Cl.4) |
| A | | 4,9,11,15,22 | A 47 L |
| | --- | | |
| X | FR-A-2 402 553 (J. BEAUGE) <br> * Seite 1; Figuren 1-8 * | 1-3 | |
| A | | 6,14,15,18,21,26,27,34 | |
| | --- | | |
| A | FR-A-2 438 458 (A. RENOUX) <br> ----- | | |

Der vorliegende Recherchenbericht wurde für alle Patentansprüche erstellt

| Recherchenort | Abschlußdatum der Recherche | Prüfer |
|---|---|---|
| DEN HAAG | 07-11-1988 | MUNZER E. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes Dokument